# EUROPEAN PATENT SPECIFICATION

(11) **EP 1 422 839 B1**
(45) Date of publication and mention of the grant of the patent: **18.07.2007**
(21) Application number: 02755914.5
(22) Date of filing: 12.08.2002
(51) Int. Cl.: H04B 7/005, H04B 7/02

(54) **RADIO COMMUNICATION SYSTEM, TERMINAL STATION AND BASE STATION OF RADIO COMMUNICATION SYSTEM, AND TRANSMISSION POWER CONTROL METHOD OF RADIO COMMUNICATION SYSTEM**
FUNKKOMMUNIKATIONSSYSTEM, ENDGERÄTESTATION UND BASISSTATION EINES FUNKKOMMUNIKATIONSSYSTEMS UND SENDELEISTUNGSREGELVERFAHREN EINES FUNKKOMMUNIKATIONSSYSTEMS
SYSTEME DE RADIOCOMMUNICATION, STATION TERMINALE ET STATION DE BASE DE CE SYSTEME DE RADIOCOMMUNICATION, ET PROCEDE DE COMMANDE DE PUISSANCE D'EMISSION DUDIT SYSTEME DE RADIOCOMMUNICATION

(30) Priority: 28.08.2001 JP 2001257157
(43) Date of publication of application: 26.05.2004
(73) Proprietor: MITSUBISHI DENKI KABUSHIKI KAISHA, Chiyoda-ku Tokyo 100-8310 (JP)
(72) Inventor: SANO, Hiroyasu, c/o Mitsubishi Denki Kabushiki K., Tokyo 100-8310 (JP)
(74) Representative: Pfenning, Meinig & Partner GbR
(86) International application number: PCT/JP2002/008220
(87) International publication number: WO 2003/021819

(56) References cited:
- EP-A- 0 936 751
- EP-A- 1 063 787
- EP-A- 1 067 707
- GB-A- 2 353 439
- JP-A- 2000 175 256
- JP-A- 2001 044 931
- JP-A- 2001 053 659

## Description

### TECHNICAL FIELD

The present invention relates to a wireless communication system that employs diversity combining.

### BACKGROUND ART

A mobile wireless communication system often employs a "site diversity system" in order to improve the quality of received signals in a terminal station. The site diversity system is realized by transmitting the same data from a plurality of base stations to one terminal station and receiving signals in the terminal station to combine the signals. The site diversity system requires "transmission power control" for controlling signal transmission power from the base stations, in order to reduce variations in the intensity of received signals transmitted from the base stations and improve demodulation capability of the signals in the terminal station.

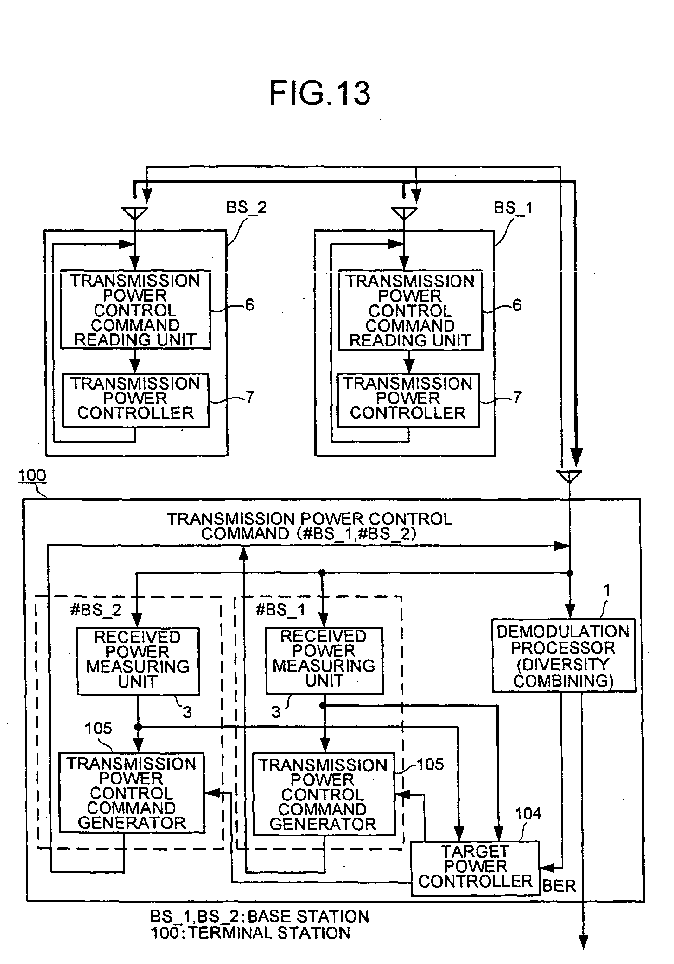

Fig. 13 is a block diagram of a wireless communication system schematically illustrating transmission power control in a conventional site diversity system described, for example, in "Independent Fast Transmit Power Control for Each Cell Site in W-CDMA Forward Link Inter-cell Site Diversity" (Morimoto et al., The Institute of Electronics, Information and Communication Engineers, Technical Report of IEICE RCS2000-163, November, 2000). The conventional method of controlling transmission power is explained below with reference to Fig. 13.

Radio signals are multiplexed in the same frequency band based on a code division multiple access (CDMA) system and transmitted from two base stations BS_1 and BS_2 to a demodulation processor 1 in a terminal station 99. A despreading process is discretely performed on each of the radio signals, and then the received signals are subjected to diversity combining to reproduce received data.

On the other hand, the radio signals multiplexed and transmitted from the base stations BS_1 and BS_2 are input in a plurality of received power measuring units 3 corresponding to the base stations BS_1 and BS_2 to which the terminal station 99 is connected. Each of the received power measuring units 3 calculates a received power for a corresponding base station.

The received powers for the base stations BS_1 and BS_2 are input in a target power controller 104. The target power controller 104 previously stores nominal values of the transmission power in the base stations BS_1 and BS_2, and compares the nominal value of the transmission power with the received power for each of the base stations BS_1 and BS_2 to calculate each propagation path loss of the received signals from the base stations BS_1 and BS_2.

The target power controller 104 determines each target value of the received power for the base stations BS_1 and BS_2 based on the respective propagation path losses of the base stations BS_1 and BS_2. The target power is set so that the target value of the received power from the base station having a small amount of propagation loss is increased and the target value of the received power from the base station having a large amount of propagation loss is decreased.

A plurality of transmission power control command generators 105 corresponding to the base stations BS_1 and BS_2 compare each received power of a corresponding base station with a target received power of the base station, respectively. As a result, if the received power is less than the target received power, the transmission power command control generator 105 generates a transmission power control command that allows the base station to increase the transmission power. On the other hand, if the received power exceeds the target power, the transmission power control command generator 105 does not generate the transmission power control command.

The transmission power control commands respectively generated for the base stations BS_1 and BS_2 are demodulated and transmitted wirelessly from the terminal station 99 to the base stations BS_1 and BS_2. Each transmission power control command reading unit 6 of the base stations BS_1 and BS_2 extracts a transmission power control command targeted to each of the base stations out of the radio signals transmitted from the terminal station 99.

As a result, when the transmission power control command targeted to the base station is extracted, a transmission power controller 7 amplifies the transmission power of the radio signal for the terminal station 99 by a predetermined amplification amount (e.g.,+ 1 dB) that is set in advance.

On the other hand, when the transmission power control command targeted to the base station is not extracted within a predetermined period set in advance, the transmission power controller 7 attenuates the transmission power of the radio signal for the terminal station 99 by a predetermined attenuation amount (e.g.,- 1 dB) that is set in advance.

In the conventional wireless communication system, the terminal station 99 sets each target power of received signals in consideration of propagation path losses for the base stations BS_1 and BS_2, and performs transmission power control discretely for the base stations BS_1 and BS_2 to obtain a desired received power.

However, in a wireless communication system that covers a service area by spacing a large number of micro cells as base stations each having a radius of, for example, hundreds meters or less, the terminal station 99 receives signals from the base stations.

The transmission power of the base stations BS_1 and BS_2 each of which covers the micro cells is lower than the transmission power of a base station that covers wide-area cells (e.g., each having a radius of about several kilometers). Therefore, radio signals transmitted from the large number of base stations and received by the terminal station 99 include the considerable number of radio signals each of which has a value less than the received power at which the radio signal can be sufficiently demodulated.

Such a low-power received signal does not contribute to improvement of image quality in site diversity combining, and therefore, the signal cannot be used for demodulation process in the terminal station 99. Further, such a signal acts as an interference component during the demodulation process of a radio signal having a large received power, which causes degradation of demodulation capability.

In such a case, the conventional wireless communication system performs transmission power control so that the transmission power of a base station transmitting the low-power received signal is increased. In actual cases, however, the transmission power of the micro-cell base station has an upper limit, and therefore, the terminal station 99 may sometimes receive a signal with undesired power.

Moreover, if the wireless communication system continues to perform the transmission power control on a plurality of low-power received signals each having been decreased to such an extent that sufficient demodulation capability. cannot be obtained in the terminal station 99, and uniformly amplifies the transmission power of the base stations, then this causes power consumption of the whole system to be increased.

EP-A-0 936 751 discloses a base station transmission power control system in a code division multi access cellular mobile radio communication system comprising a plurality of base stations respectively announcing unique pilot signals and a mobile station which is capable of simultaneously establishing connection with a soft hand over base station group consisting of some of base stations out of said base stations in the system. The mobile station detects a communication reception quality and a primary base station among the base stations, the reception level of the pilot signal of which becomes maximum among pilot signals received from respective base stations in the soft hand over base station group, notifies a base station number of said primary base station as a transmission power control signal for respective of the base stations in said soft hand over base station group when the communication reception quality is lower than a desired quality, and notifies a number other than the base station number of the base station in the soft hand over base station group when the communication reception quality is in excess of the desired quality. Each base station in the soft hand over base station group receives the transmission power control signal and is restricted in transmission power when a content of said transmission power control signal identifies a number other than the own base station number.

Further, EP-A-1 067 707 describes a method to modify a current transmitted power distribution used by at least two base stations which transmit a signal to a mobile station on the macro-diversity principle, which method consists in: measuring, at the mobile station, a quantity related to the signal to interference ratio for the part of the signal transmitted by each base station; processing some values by weighting and summing the measured quantities, a set of weighting coefficients corresponding to one hypothetical transmitted power distribution supposed to have been used by the base stations in place of the current transmitted power distribution; associating to each of said values, a value of a quality of service according to a known function; and replacing the current transmitted power distribution by one of the hypothetical transmitted power distributions providing a better value of quality of service than the current transmitted power distribution.

### DISCLOSURE OF THE INVENTION

It is an object of the present invention to solve at least the problems in the conventional technology. This object is solved by the present invention by the subject-matter of the appended claims.

A terminal station, according to one aspect of the present invention, for performing wireless communications based on diversity combining with a plurality of base stations, includes a plurality of received power measuring units each of which receives a radio signal transmitted by a corresponding one of the base stations and measures power of the radio signal; a combined signal selecting unit that determines, based on the power of each of the radio signals, a predetermined number of radio signals that are to be employed in the diversity combining; an interference signal suppression control unit that generates a transmission power suppress command for instructing suppression of transmission power according to a difference in the powers of a selected signal and an interference signal, the selected signal being the radio signal that is determined by the selecting unit as the minimum power signal of the signals to be employed in the diversity combining and the interference signal being the radio signal other than the combined signal; and a transmission processing unit that identifies a base station that has transmitted the interference signal, modulates the transmission power suppress command, and transmits the modulated transmission power suppress command to the base station that has transmitted the interference signal.

A terminal station, according to still another aspect of the present invention, for performing wireless communications based on diversity combining with a plurality of base stations includes a plurality of received power measuring units each of which receives a radio signal transmitted by a corresponding one of the base stations and measures a signal power-to-interference power ratio for a specific known series included in each of the radio signals: a combined signal selecting unit that determines, based on the signal power-to-interference power ratio of each of the radio signals, a predetermined number of radio signals that are to be employed in the diversity combining; and the interference signal suppression control unit that generates a transmission power suppress command for instructing suppression of transmission power according to a difference in the signal power-to-interference power ratios of a selected signal and an interference signal, the combined signal being the radio signals that is determined by the selecting unit as the minimum power signal of the signals to be employed in the diversity combining and the interference signal being the radio signal other than the combined signal; and a transmission processing unit that identifies a base station that has transmitted the interference signal, modulates the transmission power suppress command and transmits the modulated transmission power suppress command to the base station that has transmitted the interference signal.

A method of controlling transmission power to be used in a wireless communication system in which a terminal station performs wireless communications based on diversity combining with a plurality of base stations, according to still another aspect of the present invention, includes the terminal station receiving a radio signal transmitted by a corresponding one of the base stations; the terminal station measuring power of each of the radio signals received; the terminal station determining, based on the power of each of the radio signals, a predetermined number of radio signal that are to be employed in the diversity combining; the terminal station generating a transmission power suppress command for instructing suppression of transmission power according to a difference in the powers of a selected signal and an interference signal, the selected signal being the radio signal that is determined by the selecting unit as the minimum power signal of the signals to be employed in the diversity combining and the interference signal being the radio signal other than the combined signal; and the terminal station identifying a base station that has transmitted the interference signal, modulating the transmission power suppress command, and transmitting the modulated transmission power suppress command to the base station that has transmitted the interference signal; and each of the base stations controlling so as to suppress transmission power of a radio signal to be transmitted to the terminal station by a predetermined attenuation amount when a radio signal that includes a transmission power suppress command is received from the terminal station.

The other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 is a block diagram of a wireless communication system according to a first embodiment of the present invention; Fig. 2 illustrates an example of a slot format of a downlink in the first embodiment; Fig. 3 is a block diagram of a received power monitor controller of a terminal station in the first embodiment; Fig. 4 illustrates how to control suppression of transmission power in an interfering base station in the first embodiment; Fig. 5 illustrates an example of a slot format of an uplink in the first embodiment; Fig. 6 is a block diagram of a transmission power controller in the first embodiment; Fig. 7 is a block diagram of a weighting coefficient calculator in the first embodiment; Fig. 8 is a block diagram of a weighting coefficient calculator according to a second embodiment of the present invention; Fig. 9 illustrates how to control suppression of transmission power in a command analyzer in the second embodiment; Fig. 10 illustrates how to control suppression of transmission power in an interfering base station according to a third embodiment of the present invention; Fig. 11 is a block diagram of a weighting coefficient calculator in the third embodiment; Fig. 12 illustrates a structural example of a wireless communication system which covers a service area with a plurality of radio cell, sectors, and radio beams; and Fig. 13 is a block diagram of the conventional wireless communication system.

### BEST MODE FOR CARRYING OUT THE INVENTION

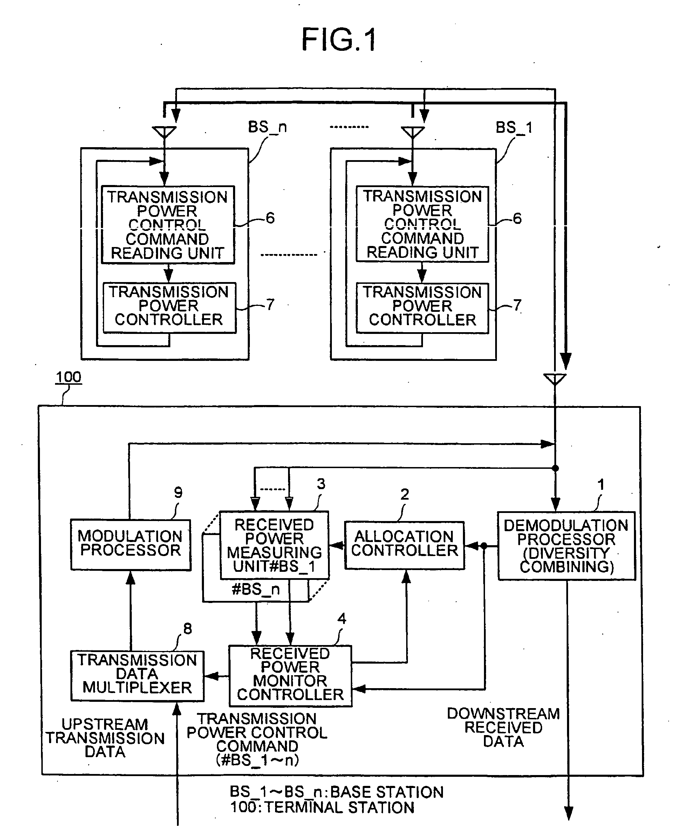

Fig. 1 is a block diagram of a wireless communication system according to a first embodiment of the present invention. As shown in Fig. 1, the wireless communication system includes a terminal station 100, and a plurality of base stations BS_1 to BS_n that transmit the same data to the terminal station 100. The terminal station 100 and the base stations BS_1 to BS_n employ a CDMA system, and each of the stations subjects transmission data to spreading modulation using discrete spreading code, and wirelessly transmits the data. The terminal station 100 receives a plurality of radio signals transmitted from the base stations BS_1 to BS_n, and performs site diversity combining on the received signals to reproduce received data.

The terminal station 100 includes a demodulation processor 1 that discretely performs a despreading process on the radio signals from the base stations BS_1 to BS_n to generate demodulated signals, and performs diversity combining on the demodulated signals to reproduce downstream received data. The terminal station 100 also includes an allocation controller 2 that specifies a base station as a target for transmission power control based on control information from the base stations BS_1 to BS_n, and a plurality of received power measuring units 3 that correspond to the base stations BS_1 to BS_n, and respectively measure received powers of radio signals from the base stations. The terminal station 100 further includes a received power monitor controller 4 that generates a transmission power control command for each of the base stations BS_1 to BS_n based on the measured received powers, and a transmission data multiplexer 8 that multiplexes the generated transmission power control commands targeted to the base stations BS_1 to BS_n on upstream transmission data to be transmitted from the terminal station 100 to the base stations. The terminal station 100 further includes a modulation processor 9 that subjects the multiplexed upstream transmission data to spreading modulation with a spreading code specific to the terminal station 100 and transmits the modulated data to the base stations BS_1 to BS_n.

On the other hand, each of the base stations BS_1 to BS_n includes a transmission power control command reading unit 6 that performs the despreading demodulation process on the radio signal transmitted from the terminal station 100 and extracts the transmission power control command targeted to the base station. Each of the base stations BS_1 to BS_n also includes a transmission power controller 7 that controls the transmission power of the radio signal for the terminal station 100 according to the transmission power control command.

It is noted that Fig. 1 illustrates only the base stations BS_1 to BS_n of a plurality of base stations. However, in an actual case, the terminal station 100 receives radio signals also from another base stations that are not shown in Fig. 1, performs site diversity combining on the received radio signals to reproduce downstream received data. The base stations BS_1 to BS_n have the same configuration as one another.

The operation of the wireless communication system according to the first embodiment is explained below.

Each of the base stations BS_1 to BS_n stores the same downstream transmission data to be transmitted to the terminal station 100 through a communication network (not shown in Fig. 1).

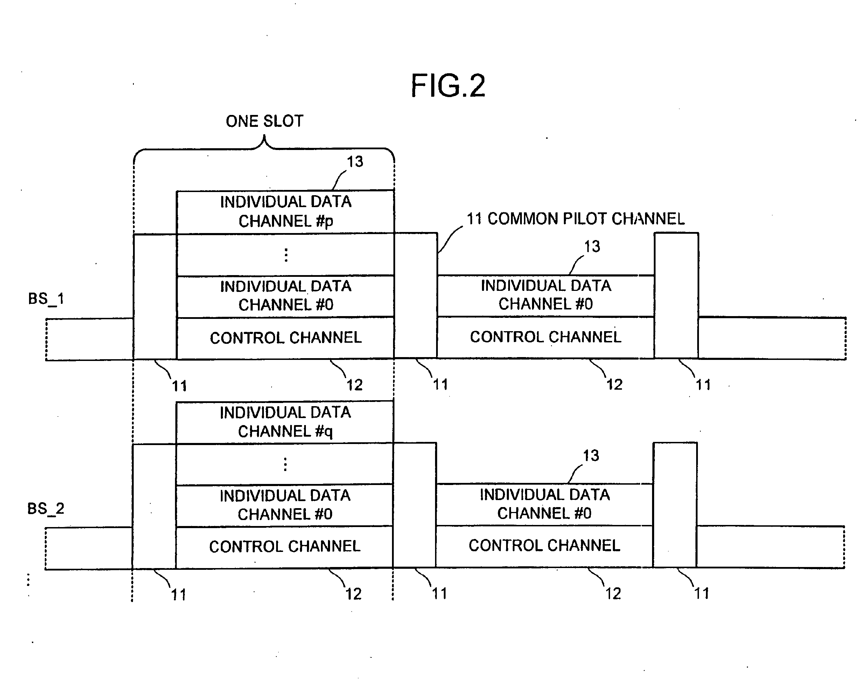

Each of the base stations BS_1 to BS_n transmits downstream data to the terminal station 100 according to the slot format of a downlink as shown in Fig. 2. Fig. 2 illustrates the slot format of the downlink. One slot includes a common pilot channel 11 consisting of known pilot series inserted for establishing synchronization between the terminal station 100 and each of the base stations BS_1 to BS_n, a control channel 12 used to transmit control signals from the base stations BS_1 to BS_n to the terminal station 100, and a plurality of individual data channels 13 used to individually transmit downstream data to the terminal station 100 connected to the base stations.

The common pilot channel 11 is transmitted with predetermined power from the base stations BS_1 to BS_n to the terminal station 100. The terminal station 100 measures a received power of the common pilot channel 11, and compares the measured received power with the known transmission power to estimate a propagation path loss between the terminal station 100 and each of the base stations BS_1 to BS_n.

Each of the base stations BS_1 to BS_n performs code-multiplexing on the individual data channels 13 to be transmitted (as shown in Fig. 2, BS_1 includes #0 to #p, BS_2 includes #0 to #q), while holding mutual slot synchronization. The terminal station 100 selectively demodulates data in a particular individual data channel (e.g., #0) among the individual data channels 13 transmitted from the base stations BS_1 to BS_n, and performs diversity combining on the demodulated data to reproduce downstream received data.

The control channel 12 is used to inform the terminal station 100 from the base stations BS_1 to BS_n of information for allocation of individual data channels, information for specifying a peripheral base station usable for site diversity, and a transmission power of the common pilot channel for the base stations BS_1 to BS_n.

In the terminal station 100, the demodulation processor 1 detects a known pilot series included in the common pilot channel 11, synchronizes the terminal station 100 and each of the base stations BS_1 to BS_n, receives the control channel 12 to acquire control information required for performing site diversity combining, and transmits the control information to the allocation controller 2 and the received power monitor controller 4.

The allocation controller 2 specifies particular base stations BS_1 to BS_n that transmit downstream data to the terminal station 100 based on the control information, and allocates corresponding received power measuring units 3 to the specified base stations BS_1 to BS_n. The received power measuring units 3 repeatedly measure the received power of the common pilot channel for the corresponding base stations BS_1 to BS_n in each slot, and inform the received power monitor controller 4 of the measured received powers.

The received power monitor controller 4 performs transmission power control for the base stations BS_1 to BS_n as explained below each time the received power is measured.

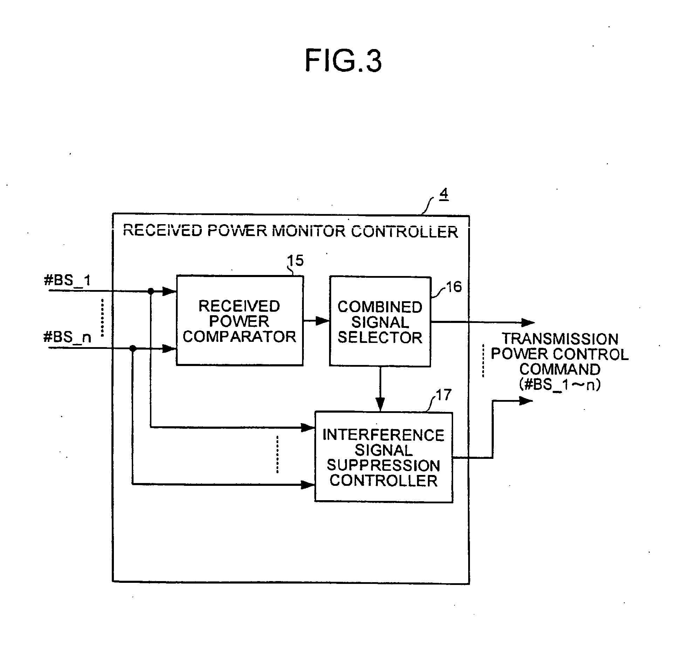

Fig. 3 is a block diagram of the received power monitor controller 4. The received power monitor controller 4 includes a received power comparator 15 that sorts received powers for the base stations BS_1 to BS_n, and a combined signal selector 16 that specifies the predetermined number of base stations to be actually used for site diversity by the terminal station 100 based on the result of sorting. The received power monitor controller 4 also includes an interference signal suppression controller 17 that controls suppression of the transmission power of any base station that has not been selected by the combined signal selector 16, of the base stations BS_1 to BS_n allocated to the terminal station 100.

The received power comparator 15 sorts the calculated received powers of the base stations BS_1 to BS_n in descending order, and informs the combined signai selector 16 of the result of sorting. The sorting process of the received powers is performed each time the received power measuring unit 3 measures the received power.

The combined signal selector 16 selects a base station such that a signal received from the base station is used for site diversity based on the result of sorting of the received powers. The combined signal selector 16 previously stores the number K of base stations (e.g., K=3 stations) to be used for site diversity, and specifies base stations ranging from one having the maximum received power to a K-th one, as "power-combined base stations" used for site diversity combining.

The number K of base stations used for site diversity is a value that is previously obtained through experiments and is sufficient enough to obtain desired demodulation capability in the demodulation process of the terminal station 100.

The combined signal selector 16 generates "transmission power maintain command", as a command for transmission power control for the specified K-units of power-combined base stations, consisting of information (e.g., CS-ID specific to each base station) for specifying a power-combined base station and information (e.g., "1111") for instructing to maintain present transmission power.

On the other hand, the radio signal of a base station that has not been selected as a power-combined base station is not used for site diversity combining in the terminal station 100, and acts only as an interference signal. Therefore, the combined signal selector 16 informs an interference signal suppression controller 17 of the information for specifying a base station (hereinafter, "interfering base station") that has not been selected as the power-combined base station.

The interference signal suppression controller 17 generates a transmission power control command for controlling suppression of each transmission power of the interfering base stations.

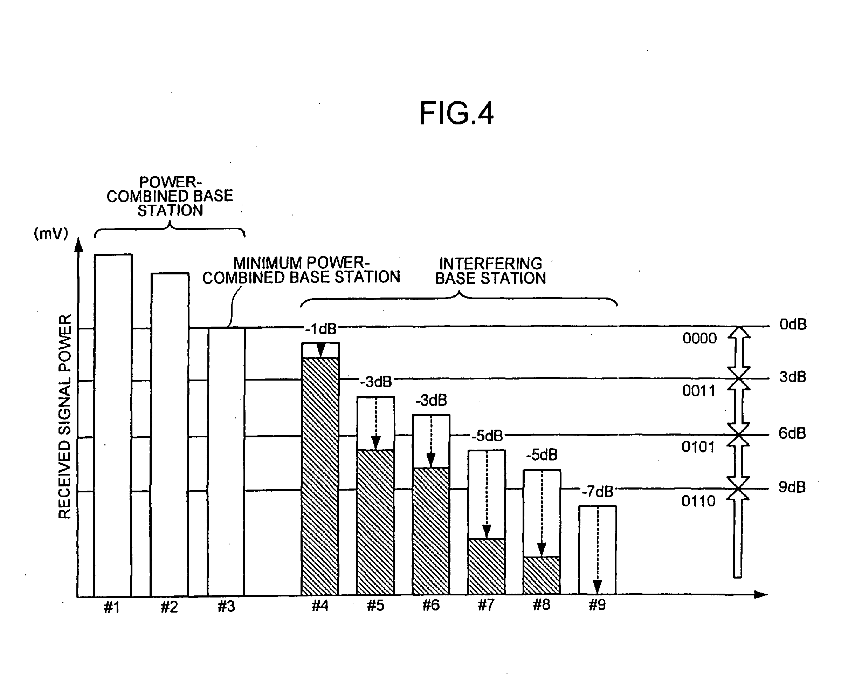

Fig. 4 illustrates how to control suppression of the transmission power by the interference signal suppression controller 17 (herein, the total number n of base stations = 9). At first, the interference signai suppression controller 17 compares the received power of each of the interfering base stations #4 to #9 with the received power of a power-combined base station #3 (hereinafter, "minimum power-combined base station") as the K-th base station from the result of sorting the received powers, and sequentially calculates a difference between the received powers (hereinafter, "received power difference").

On the other hand, the interference signal suppression controller 17 previously stores threshold values of an interference power difference with which the interfering base stations are classified into a plurality of classes. In the example of Fig. 4, the interference signal suppression controller 17 stores threshold values of three received power differences such as 3 dB, 6 dB, and 9 dB. The interference signal suppression controller 17 classifies the interfering base stations #4 to #9 into a plurality of classes according to the threshold values.

In the example shown in Fig. 4, the interfering base station #4 is specified as a class with a received power difference of 0 to 3 dB, the interfering base stations #5 and #6 as a class with the received power difference of 3 to 6 dB, the interfering base stations #7 and #8 as a class with the received power difference of 6 to 9 dB, and the interfering base station #9 as a class with the received power difference greater than 9 dB.

The interference signal suppression controller 17 generates information indicating any of the classes related to the received power differences (hereinafter, "power-difference class information") for each interfering base station belonging to each of the specified classes.

In order to control transmission power as appropriately as possible even if a propagation error occurs in a wireless zone during transmission of the power-difference class information to the base station, the interference signal suppression controller 17 uses an information series having mutual orthogonality and redundancy like Walsch code as the power-difference class information.

More specifically, as the power-difference class information, information series "0000" is used for the interfering base station #4 belonging to the class of 0 to 3 dB, and "0011" is allocated to the class of 3 to 6 dB, "0101" to the class of 6 to 9 dB, and "0110" to the class greater than 9 dB, respectively.

The interference signal suppression controller 17 generates a "transmission power suppress command" including information (e.g., BS-ID specific to a base station) for specifying a particular interfering base station in each of the interfering base stations #4 to #9 and the power-difference class information.

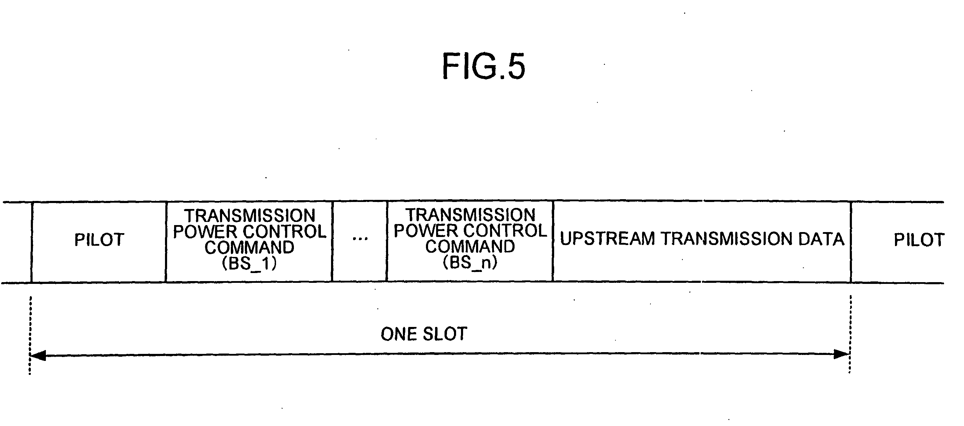

As explained above, when "transmission power maintain command" or "transmission power suppress command" (hereinafter, both are simply referred to as "transmission power control command") is generated for all the power-combined base stations and interfering base stations, the transmission data multiplexer 8 multiplexes the transmission power control commands for the base stations BS_1 to BS_n onto the upstream transmission data to be transmitted from the terminal station 100 to the base stations BS_1 to BS_n according to the upstream slot format as shown in Fig. 5. The modulation processor 9 subjects the upstream transmission data multiplexed on the slot data to spreading modulation process, and transmits the modulated data to the base stations.

Each of the base stations BS_1 to BS_n receives a radio signal transmitted from the terminal station 100. Each of the transmission power control command reading units 6 in the base stations BS_1 to BS_n performs the despreading demodulation process on the radio signal, reads a plurality of transmission power control commands multiplexed on the upstream transmission data, extracts only the transmission power control command targeted to the base station based on the CS-ID included in each of the transmission power control commands, and informs the transmission power controller 7 of the corresponding command.

The transmission power controller 7 controls the transmission power of the individual data channel 13 allocated to the terminal station 100 based on the transmission power control command.

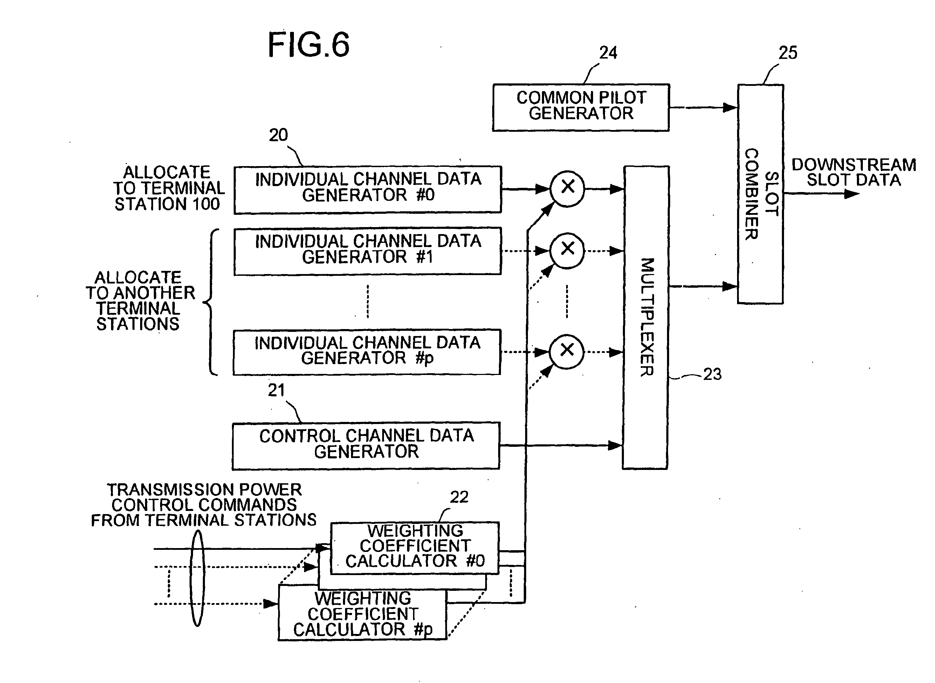

Fig. 6 is a block diagram of the transmission power controller 7. The transmission power controller 7 includes a plurality of individual channel data generators 20 that generate channel data for the individual data channels #1 to #p transmitted from the base station, and a control channel data generator 21 that generates control information to be transmitted over the control channel 12. The transmission power controller 7 also includes a plurality of weighting coefficient calculators 22 each of which calculates a weighting coefficient of each of the corresponding individual data channels #1 to #p and controls transmission power, and a multiplexer 23 that multiplexes the individual channel data #1 to #p each having a predetermined weight on the data for control channel 12. The transmission power controller 7 further includes a common pilot generator 24 that generates a known pilot series to be inserted into the common pilot channel 11, and a slot combiner 25 that receives the multiplexed data output from the multiplexer 23 and the pilot series to generate downstream slot data as shown in Fig. 2.

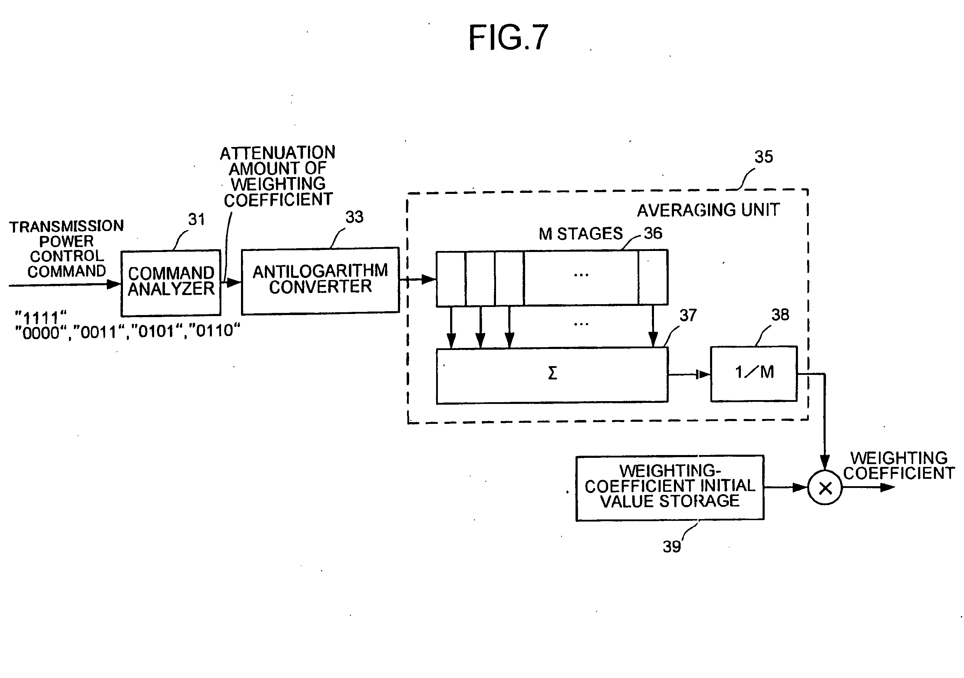

Fig. 7 is a block diagram of the weighting coefficient calculator 22. The weighting coefficient calculator 22 includes a command analyzer 31 that extracts the information series inserted in the transmission power control command and outputs an attenuation amount of each weighting coefficient for the individual data channels 13, and an antilogarithm converter 33 that converts the attenuation amount of the weighting coefficient calculated as a logarithm to an antilogarithm. The weighting coefficient calculator 22 also includes an averaging unit 35 that sequentially outputs moving averages of the attenuation amount, and a weighting-coefficient initial value storage 39 that stores a preset default value of the weighting coefficient for a corresponding individual data channel 13.

The transmission power control command informed from the transmission power control command reading unit 6 is input into the command analyzer 31 of the weighting coefficient calculator 22. The command analyzer 31 extracts a particular information series (e.g., "1111 ") indicating "transmission power maintain command" or power-difference class information ("0000", "0011", "0101", or "0110") indicating "transmission power suppress command", from the transmission power control command.

Since a transmission error is added, on a link, to the transmission power control command received from the terminal station 100, the transmission power control command may not match with any of the information series ("1111", "0000", "0011", "0101", and "0110"). Therefore, the command analyzer 31 calculates a correlation value between an information series, having a likelihood of including the transmission error, extracted from the transmission power control command and each of the desired information series ("1111", "0000", "0011", "0101", and "0110"). The command analyzer 31 then determines the information series indicating the highest correlation between the two as an information series included in the transmission power control command.

As a result, if the extracted transmission power control command is determined as "transmission power suppress command" (the base station is the interfering base station), the command analyzer 31 determines the attenuation amount of the weighting coefficient for the individual data channel 13 according to the power-difference class information included in the "transmission power suppress command".

As shown in Fig. 4, for example, if the power-difference class information is "0000" (received power difference: 0 to 3 dB), then an attenuation amount of the transmission power is set to -1 dB, if it is "0011" (received power difference: 3 to 6 dB), then the attenuation amount is set to -3 dB, if it is "0101" (received power difference: 6 to 9 dB), then the attenuation amount is set to -5 dB, and if it is "0110" (received power difference: 9 dB or more), then the attenuation amount is set to -7 dB. In this manner, each attenuation amount of the weighting coefficient for the individual data channels 13 is determined according to the power-difference class information included in the "transmission power suppress command".

As explained above, the attenuation amount of the weighting coefficient for the transmission power is set small when the received power difference is small (attenuation amount in the class of received power difference of 0 to 3 dB: -1 dB), and the attenuation amount of the weighting coefficient for the transmission power is set larger when the received power difference is greater (attenuation amount in the class of received power difference of 9 dB or more: -7 dB). By thus setting, the transmission power of the interfering base station having a small received power difference is slowly suppressed, but the transmission power of the interfering base station having a greater received power difference is speedily suppressed.

On the other hand, if the extracted transmission power control command is determined as "transmission power maintain command" (the base station is a power-combined base station), the command analyzer 31 sets the attenuation amount of the weighting coefficient for the individual data channel 13 to 0 dB.

The antilogarithm converter 33 converts each attenuation amount (0 dB, -1 dB, -3 dB, and -5 dB) of the weighting coefficient calculated as logarithms to antilogarithms. The attenuation amount of the weighting coefficient converted to the antilogarithm is input to the averaging unit 35, and the moving averaging process is performed on the attenuation amount over a predetermined period of time for averaging. In the example of Fig. 7, the averaging unit 35 includes an M-stage shift register 36, an adder 37 that calculates a sum of the attenuation amounts stored in the stages of the shift register 36, and a divider 38 that divides the output of the adder 37 by the number of stages M of the shift register. The averaging unit 35 performs moving averaging process on the attenuation amount of the weighting coefficient over an M slot period of time to suppress an abrupt change in the weighting coefficient.

The default value of the weighting coefficient for the transmission power of the individual data channel previously stored in the weighting-coefficient initial value storage 39 is multiplied by the averaged attenuation amount of the weighting coefficient, and a weighting coefficient for the individual data channel 13 is calculated.

The weighting coefficient calculators 22 discretely calculate each weighting coefficient for the corresponding individual data channels #0 to #p.

The channel data for the individual data channels #0 to #p generated in individual channel data generators 20 is multiplied by each corresponding weighting coefficient to be input in the multiplexer 23. In the individual data channel 13 to which "transmission power suppress command" is transmitted from the terminal station 100, the weighting coefficient is decreased, and the transmission power from the base station is suppressed. On the other hand, in the individual data channel 13 to which "transmission power maintain command" is transmitted from the terminal station 100, the weighting coefficient is maintained at the default value, and therefore, the transmission power from the base station is not suppressed.

The multiplexer 23 receives each transmission data for the weighted individual data channels #0 to #p and control information output from the control channel data generator 21, and performs code-multiplexing on them to be output. Further, the slot combiner 25 inserts the common pilot channel 11 in the multiplexed data to sequentially generate downstream slot data, performs spreading modulation process on the slot data, and transmits the modulated slot data to the terminal station 100.

As explained above, in the wireless communication system according to the first embodiment, the terminal station 100 selects a power-combined base station used for site diversity based on each received power of the base stations BS_1 to BS_n. The terminal station 100 also performs transmission power control on another interfering base station that has not been selected as the power-combined base station so that the transmission power of a radio signal from the interfering base station to the terminal station 100 is suppressed. Therefore, influence of interference due to the radio signal transmitted from the interfering base station is reduced to allow improvement in demodulation capability of the terminal station 100.

By making effective use of radio resources of the whole wireless communication system, it is possible to enhance the capacity for accommodating terminal stations in the whole wireless communication system, and to achieve lower power consumption of the whole wireless communication system.

Further, the interfering base station having a small received power difference sets small the attenuation amount of the transmission power, and the interfering base station having a larger received power difference sets larger the attenuation amount of the transmission power. By thus setting, it is possible to control high-speed suppression of an interference signal from the interfering base station having the large received power difference. Furthermore, even if the power-combined base station as a target for site diversity is switched during movement of the terminal station 100, it is also possible to reduce degradation of communication quality due to switching between the base stations.

As the transmission power control commands transmitted from the terminal station 100 to the base stations BS 1.to BS_n, the information series having predetermined redundancy is employed. Therefore, it is possible to reduce influence of a transmission error occurring on a link and accurately control the transmission power.

In the wireless communication system according to the first embodiment, the received power measuring units 3 in the terminal station 100 measure received powers of the base stations BS_1 to BS_n, and the received power monitor controller 4 controls the transmission power according to the received powers. However, the transmission power control is not performed based on only the received powers.

For example, each of the received power measuring units 3 calculates an average power obtained by adding the square of a symbol signal in a pilot series included in the common pilot channel 11 and dividing the addition by the number of symbols in the pilot series, and also calculates an interference power obtained as a spread of the received power for each symbol in the pilot series. The received power measuring unit 3 sequentially outputs a signal power-to-interference power ratio (SIR) as a ratio between the average power and the interference power for the base stations BS_1 to BS_n. The received power monitor controller 4 may select a power-combined base station in the same manner as explained above based on each signal power-to-interference power ratio of the base stations BS_1 to BS_n, and control suppression of the transmission power for the interfering base station.

The received power measuring unit 3 measures a received power of each downstream slot, but this is not limited to this structure. Therefore, the received power measuring unit 3 may calculate each average value of the received powers and the signal power-to-interference power ratios for the preset slots, and the received power monitor controller 4 may generate a transmission power control command based on the average values.

Furthermore, the received power measuring unit 3 may include a low-pass filter having a cut-off frequency that has been previously determined through experiments, and perform filtering on the received power or the signal power-to-interference power ratio to generate a transmission power control command based on the output value of the filter.

In such a configuration, influence of instantaneous fluctuation in the received power due to fading is reduced. Thus, it is possible to realize transmission power control capable of highly precisely compensating for the influence of propagation path loss between the terminal station 100 and each of the base stations BS_1 to BS_n.

The transmission data multiplexer 8 of the terminal station 100 multiplexes the transmission power control commands for the base stations BS_1 to BS_n onto the upstream transmission data in each upstream slot according to the upstream slot format as shown in Fig. 5. However, the upstream slot format is not limited to such a structure, and the following structure may be employed. That is, transmission power control commands for the predetermined number of base stations are sequentially inserted in each upstream slot in such a manner that the transmission power control command for the base station BS_1 is inserted into a first upstream slot and the transmission power control command for the base station BS_2 is inserted into a second upstream slot. The transmission power control commands for the whole base stations BS_1 to BS_n may be transmitted using the plurality of upstream slots.

In the first embodiment, the transmission power controller 7 in the interfering base station controls only suppression of the transmission power for the individual data channels 13. However, in the second embodiment, the transmission power controller 7 decreases the attenuation amount of the transmission power, which has been suppressed, for any individual data channel 13 according to an instruction from the terminal station 100 (that is, the suppressed transmission power is increased).

The wireless communication system according to the second embodiment is different from that of the first embodiment only in the configuration of the weighting coefficient calculators 22 in the base stations BS_1 to BS_n, and the rest of the components have the same configuration as those of the first embodiment. Therefore, only the configuration and operation of the weighting coefficient calculator 22 are explained below.

The transmission power control command transmitted from the terminal station 100 is extracted by each transmission power control command reading unit 6 in the base stations BS_1 to BS_n, and the extracted command is informed to the transmission power controller 7.

The transmission power control command has, like in the first embodiment, "transmission power maintain command" for instructing the power-combined base station to maintain the transmission power, and "transmission power suppress command" including the power-difference class information (class of 0 to 3 dB: "0000", class of 3 to 6 dB: "0011", class of 6 to 9 dB: "0101", and class greater than 9 dB: "0110") indicating the classes of the interference power difference to which the interfering base stations belong. Each of the transmission power controllers 7 in the base stations BS_1 to BS_n reads out an information series of the "transmission power suppress command" to ascertain a received power difference of the individual data channel 13 in the terminal station 100.

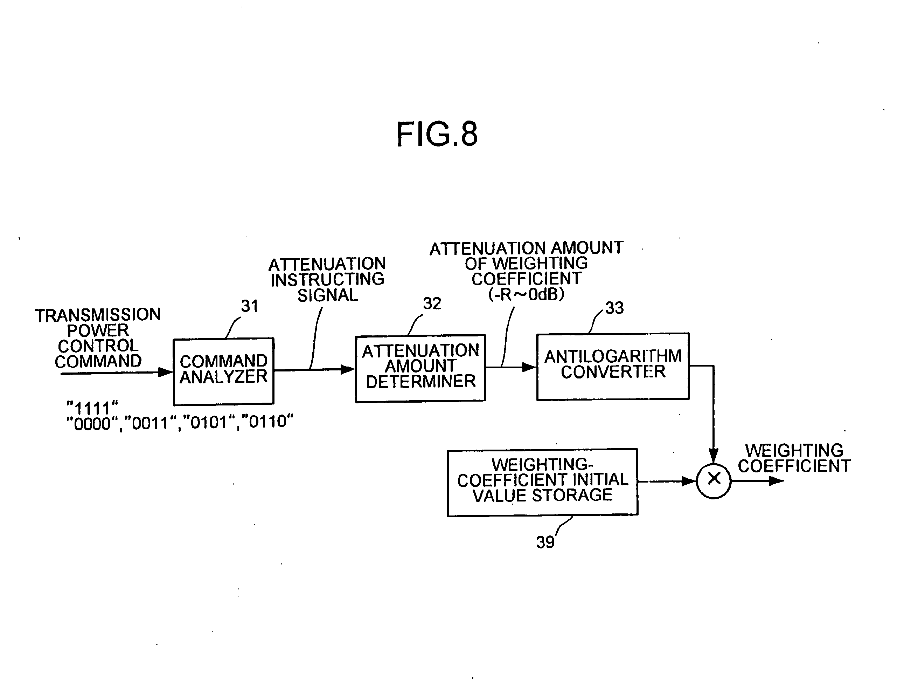

Fig. 8 is a block diagram of the weighting coefficient calculator 22 of the transmission power controller 7 in the second embodiment. The weighting coefficient calculator 22 includes a command analyzer 31 that extracts an information series for transmission power control inserted in the transmission power control command and outputs an attenuation instructing signal for a weighting coefficient for the individual data channel 13, and an attenuation amount determiner 32 that determines an attenuation amount of the weighting coefficient for the individual data channel 13 according to the attenuation instructing signal.

When receiving the transmission power control command from the terminal station 100, the command analyzer 31 extracts a particular information series ("1111") for instructing to maintain transmission power from the "transmission power maintain command", and extracts power-difference class information (any of "0000", "0011", "0101", and "0110") for the individual data channel 13 from the "transmission power suppress command".

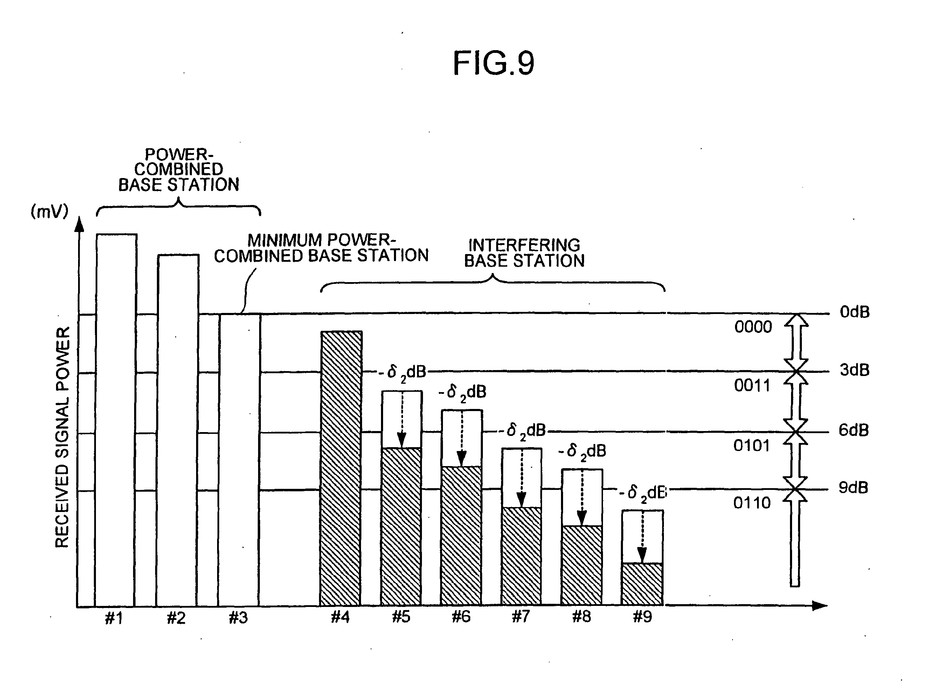

The command analyzer 31 determines a change amount of the weighting coefficient for the individual data channel 13 according to the extracted information series, and outputs the change amount as an attenuation instructing signal. The method of calculating the change amount of the weighting coefficient in the command analyzer 31 is explained with reference to Fig. 9. Fig. 9 illustrates how to control suppression of the transmission power in the command analyzer 31.

The command analyzer 31 previously stores threshold values for received power differences (hereinafter, "power-suppressed threshold value") for determining whether the transmission power for the terminal station 100 is to be suppressed. As the power-suppressed threshold values for the base stations BS_1 to BS_n, appropriate values are previously obtained through experiments in order to obtain desired demodulation capability of the terminal station 100. The case where 3 dB is set as the power-suppressed threshold value is explained below.

The command analyzer 31 compares a received power difference corresponding to the power-difference class information with the power-suppressed threshold value. For example, in the interfering base station #4, the extracted information series is "0000", and the command analyzer 31 compares the received power difference (0 to 3 dB) specified by the information series "0000" with the power-suppressed threshold value (3 dB).

In this case, the received power difference is the power-suppressed threshold value or less, and therefore, the command analyzer 31 determines that the interfering base station #4 has a likelihood of being selected as a power-combined base station during movement of the terminal station. The command analyzer 31 outputs a positive change amount "+ δ₁ dB", that makes the weighting coefficient for the individual data channel 13 close to the default value, as the attenuation instructing signal.

In the interfering base stations #5 to #9, the information series "0011", "0101", and "0110" are input in the command analyzer 31 according to each class of the interference power differences. ln this case, as any of the received power differences (3 dB, etc.) exceeds the power-suppressed threshold value, the command analyzer 31 determines that the interfering base stations #5 to #9 have a low likelihood of being selected as the power-combined base stations, and outputs a negative change amount "-δ₂ dB" of the weighting coefficient as an attenuation instructing signal in order to suppress the transmission power for the individual data channel 13.

Each magnitude of the change amounts "+δ₁ dB" and "-δ₂ dB" of the weighting coefficient to be output as the attenuation instructing signal depends on responsivity to a request to control transmission power for the interfering base stations #4 to #9, and is previously determined through experiments.

On the other hand, in the power-combined base stations #1 to #3, the information series input to the command analyzer 31 is "1111" for instructing to maintain the transmission power. In this case, the command analyzer 31 outputs the change amount "0 dB" of the weighting coefficient as the attenuation instructing signal in order to maintain the transmission power of the individual data channel 13.

The attenuation amount determiner 32 integrates the attenuation instructing signals to determine an attenuation amount of the weighting coefficient for the individual data channel 13. The attenuation amount determiner 32 previously stores an allowable setting range (- R to 0 dB) of the attenuation amount, and the integrated value that is beyond the allowable setting range is rounded so as to fall within the allowable setting range (- R to 0 dB).

The antilogarithm converter 33 converts the attenuation amount of the weighting coefficient (- R to 0 dB) calculated as a logarithm to an antilogarithm. The default value of the weighting coefficient for the transmission power of the individual data channel previously stored in the weighting-coefficient initial value storage 39 is multiplied by the attenuation amount of the weighting coefficient having been converted to the antilogarithm, and the weighting coefficient for the individual data channel 13 is calculated.

As explained above, the interfering base station #4 having a received power difference that is the power-suppressed threshold value or less, adds the positive change amount "+δ₁ dB" to the attenuation amount of the transmission power so that the weighting coefficient of the transmission power approaches the preset default value. Therefore, in the interfering base station #4 having a likelihood of being used for site diversity combing process in the terminal station 100, even if the suppression has already been performed, the transmission power of the interfering base station #4 is increased to allow reduction in degradation of communication quality occurring when power-combined base stations are switched.

On the other hand, in the interfering base stations #5 to #9 each of which has a received power difference that is greater than the power-suppressed threshold value, the negative change amount "-δ₂ dB" is added to the attenuation amount of the transmission power in order to suppress the transmission power. Therefore, it is possible to speedily suppress the transmission power of any interfering base station having a low likelihood of being selected as the power-combined base station, and to improve demodulation capability of the terminal station 100.

The attenuation amount determiner 32 has a configuration of integrating the attenuation instructing signals to determine an attenuation amount of the weighting coefficient. Therefore, it is possible to suppress influence caused by instantaneous fluctuations in the received power due to noise or fading, and to accurately control the transmission power that reflects each received power difference for the base stations BS_1 to BS_n.

In the wireless communication system of the first embodiment, the received power monitor controller 4 respectively classifies the interfering base stations into a plurality of classes based on each received power, generates a predetermined "transmission power suppress command" for each class, and controls the transmission power. However, in the third embodiment, the received power monitor controller 4 in the terminal station 100 previously stores a threshold value of the received power difference for instructing the base station to suppress the transmission power, and transmission power control for the interfering base station can be easily performed based on the threshold value.

The wireless communication system of the third embodiment is different from the first embodiment only in the process of generating the transmission power control command in the received power monitor controller 4 of the terminal station 100 and in the process of controlling the transmission power of the individual data channels 13 in each of the transmission power controllers 7 of the base stations BS_1 to BS_n. The rest of processes in the controlling method are the same as those of the first embodiment. Therefore, only the received power monitor controller 4 and the method of controlling transmission power in the transmission power controller 7 are explained below.

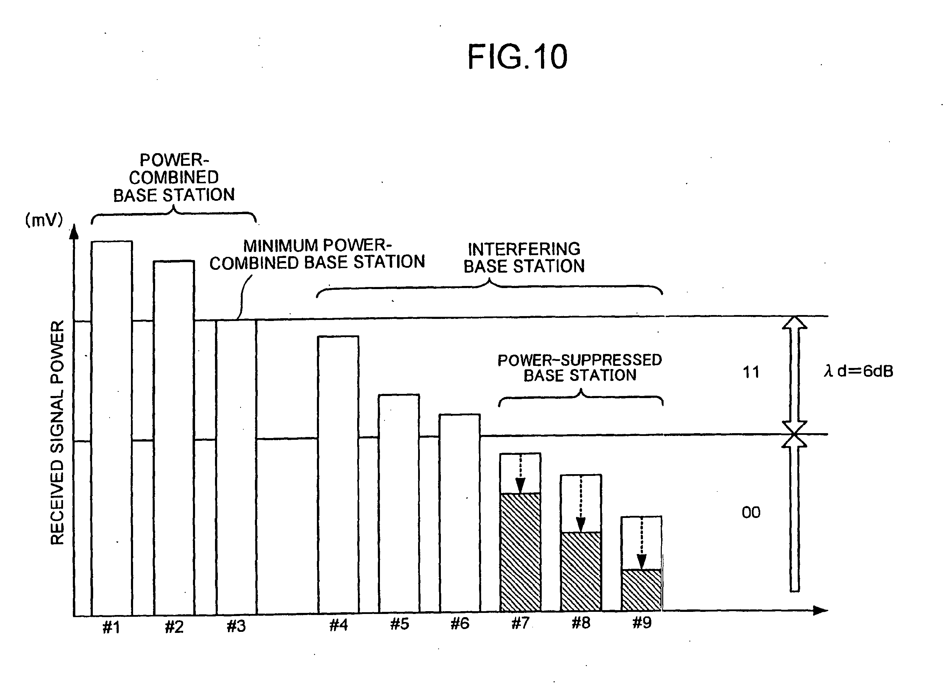

Fig. 10 illustrates how to control suppression of transmission power in the received power monitor controller 4 and the transmission power controller 7 according to the third embodiment. The method of generating a transmission power control command in the received power monitor controller 4 is explained below with reference to Fig. 10.

When each of the received power measuring units 3 measures a received power of the base stations BS_1 to BS_n, the received power monitor controller 4 sorts base stations #1 to #3 of K stations (when K=3) as power-combined base stations in descending order of received powers, and specifies any base stations other than the power-combined base stations as interfering base stations #4 to #9 in the same manner as that of the first embodiment.

The received power monitor controller 4 previously stores a threshold value λd (hereinafter, "attenuation-instructed threshold value") of a received power difference between the received power of the minimum power-combined base station #3 and the received power of each interfering base station in order to specify a power-suppressed base station. In the example of Fig. 10, the attenuation-instructed threshold value λd = 6 dB is previously set, and the received power monitor controller 4 specifies the interfering base stations #7 to #9 each having a received power difference that is the attenuation-instructed threshold value λd or more, each as an interfering base station that is instructed to suppress the transmission power (hereinafter, "power-suppressed base station").

The received power monitor controller 4 generates each transmission power control command for the base stations BS_1 to BS_n in each slot in which each value of received power from the base stations BS_1 to BS_n is measured.

At first, the received power monitor controller 4 generates "transmission power maintain command" consisting of information (e.g., BS-ID specific to each base station) for specifying each of the power-combined base stations #1 to #3 and the interfering base stations #4 to #6 other than the power-suppressed base station, and a particular information series (e.g., "00") for instructing to maintain transmission power.

On the other hand, the received power monitor controller 4 generates "transmission power suppress command" consisting of particular information for the power-suppressed base stations #7 to #9 and a particular information series (e.g., "11") for instructing them to suppress the transmission power.

The information for transmission power control only represents either its suppression or maintenance, and therefore, the information can be informed with one-bit data ("0" or "1"). However, in the third embodiment, information series ("11" and "00") each having redundancy as the information for the transmission power control are used.

Each transmission power control command generated for the base stations BS_1 to BS_n is multiplexed onto upstream transmission data by the transmission data multiplexer in the same manner as the first embodiment, and the multiplexed data is transmitted to the base stations BS_1 to BS_n.

Each of the transmission power control command reading units 6 in the base stations BS_1 to BS_n reads a transmission power control command targeted to a relevant base station, from the upstream radio signal transmitted from the terminal station 100 and inputs the read command to the transmission power controller 7. Each of the weighting coefficient calculators 22 of the transmission power controller 7 determines a weighting coefficient of channel data for a corresponding individual data channel 13 according to the transmission power control command.

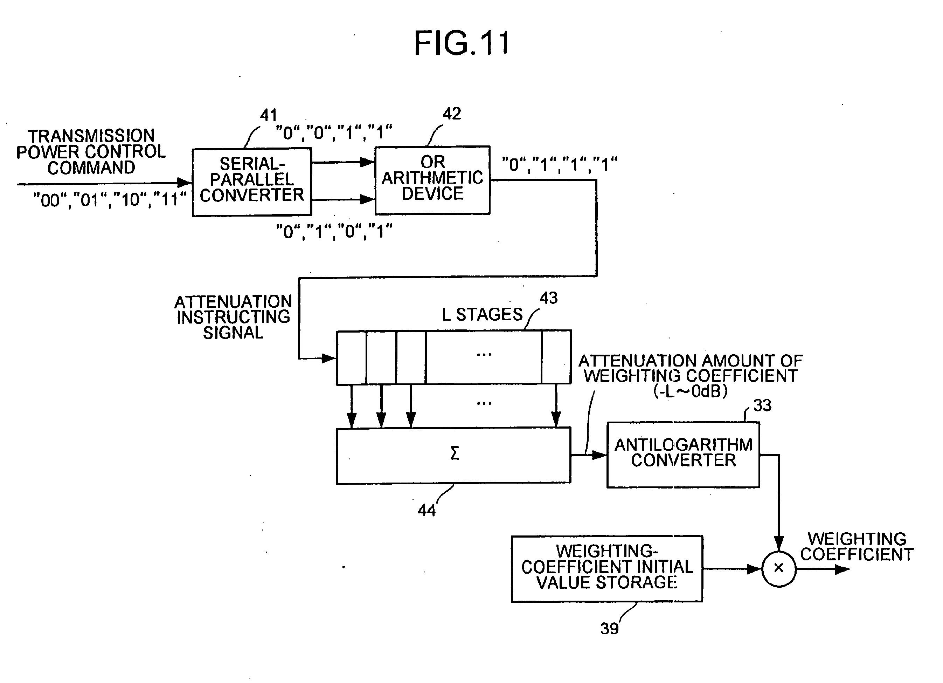

Fig. 11 is a block diagram of the weighting coefficient calculator 22. The weighting coefficient calculator 22 includes a converter 41 that extracts an information series for maintenance and suppression of the transmission power from the transmission power control command for each of the individual data channels 13 to perform serial-parallel conversion on the extracted information series. The weighting coefficient calculator 22 also includes an arithmetic device 42 that receives the information series having been subjected to the serial-parallel conversion, and sequentially performs OR operations between the information series to output an attenuation instructing signal indicating attenuation of the transmission power. The weighting coefficient calculator 22 further includes an L-stage shift register 43 that holds the attenuation instructing signals, and an adder 44 that adds the attenuation instructing signals for L slots in the past held in the shift register 43 and calculates an attenuation amount (- L to 0 dB) of the weighting coefficient for the individual data channel.

The serial-parallel converter 41 extracts each information series for transmission power control included in the transmission power control commands. The information series includes either the information series "00" indicating "transmission power maintain command" or the information series "11" indicating "transmission power suppress command", but sometimes includes, in addition to the information series, an invalid information series such as "01 and "10" due to influence of transmission error that occurs on the link.

The serial-parallel converter 41 separates a first bit from a second bit of the information series to convert the separated bits to parallel data, and the OR arithmetic device 42 performs OR operation between the first bit and the second bit. As a result, the information series ("00", "01", "10", "11") included in the actually received transmission power control command is converted to information (hereinafter, "attenuation instructing signal") consisting of "1" for instructing suppression of the transmission power and "0" for instructing maintenance of the transmission power. More specifically, the information series for the transmission power having a 2-bit length with redundancy "00", "01", "10", and "11" are converted to attenuation instructing signals "0", "1", "1", and "1", respectively.

The attenuation instructing signals output from the OR arithmetic device 42 are sequentially input in the L-stage shift register 43. The adder 44 calculates a total sum of the attenuation instructing signals stored in the shift register 43 each time a new attenuation instructing signal is input in the shift register, and outputs the total sum as an attenuation amount (- L to 0 dB) of the weighting coefficient for the individual data channel. The attenuation amount (- L to 0 dB) of the weighting coefficient is calculated as a logarithm, but this amount is converted to an antilogarithm by the antilogarithm converter 33.

On the other hand, the weighting-coefficient initial value storage 39 presets a default value of the weighting coefficient, and in an initial state in which transmission power control is not performed by the terminal station 100, the default value is output as a weighting coefficient for the individual data channel 13.

When the attenuation amount of the weighting coefficient having been converted to the antilogarithm is output from the antilogarithm converter 33, the attenuation amount is multiplied by the default value of the weighting coefficient for the transmission power, and the weighting coefficient for the individual data channel 13 is calculated.

As a result, the "transmission power suppress command" for an individual data channel is transmitted from the terminal station 100, and the transmission power for the individual data channel from the base station is suppressed.

In the example of Fig. 10, for the power-suppressed base stations #7 to #9 to which the "transmission power suppress command" is transmitted, the received power in the terminal station 100 is suppressed. On the other hand, for the base stations #1 to #6 to which the "transmission power maintain command" is transmitted, the received power in the terminal station 100 is maintained.

In the wireless communication system of the third embodiment, the terminal station 100 previously stores an attenuation-instructed threshold value for instructing to suppress the transmission power, specifies an interfering base station having a received power difference that is greater than the attenuation-instructed threshold value, as a power-suppressed base station, and transmits "transmission power suppress command" for controlling to suppress the transmission power, to the power-suppressed base station. The power-suppressed base station controls so as to suppress the transmission power of the individual data channel 13 for the terminal station 100. Therefore, it is possible to speedily reduce the transmission power of interfering base stations having less likelihood of being used for site diversity combining in the terminal station 100. It is further possible to reduce power consumption of the whole wireless communication system and to reduce interference power produced in the system.

In addition to the power-combined base stations used for site diversity combining in the terminal station 100, the "transmission power maintain command" is transmitted to an interfering base station having a received power difference that is less than the attenuation-instructed threshold value λd so as to maintain the transmission power of the interfering base station. Thus, even if the power-combined base stations for site diversity are switched during movement of the terminal station 100, it is possible to minimize degradation of reception quality in the terminal station 100.

In the third embodiment, each of the weighting coefficient calculators 22 of the base stations BS_1 to BS_n converts the information series, for the transmission power control, that has been converted to parallel data by the serial-parallel converter 41 into each attenuation instructing signal having a 1-bit length in the OR arithmetic device 42. However, as a converter of the information series to the attenuation instructing signal, an AND arithmetic device may be used instead of the OR arithmetic device 42.

In this case, the information series each having redundancy for the transmission power control "00", "01", "10", and "11" are converted into attenuation instructing signals "0", "0", "0", and "1", respectively. Therefore, when a transmission error occurs in the information series ("01", "10"), the information series is converted to an attenuation instructing signal "0" indicating maintenance of the transmission power. Thus, it is possible to avoid inappropriate suppression of the transmission power of the individual data channel 13 based on the transmission error.

The received power measuring unit 3 and the received power monitor controller 4 in the terminal station 100 generate transmission power control commands based on the respective values of received power from the base stations BS_1 to BS_n, but the configuration is not thus limited. Instead of the received powers for the base stations BS_1 to BS_n, a signal power-to-interference power ratio (SIR) may be used to specify a power-combined base station and a power-suppressed base station and generate the transmission power control commands for the base stations BS_1 to BS_n.

Furthermore, in the third embodiment, the terminal station 100 measures a received power of each downstream slot, generates a transmission power control command, and transmits the command. Each of the base stations BS_1 to BS_n calculates a weighting coefficient for each of the individual data channels 13 and controls the transmission power of each upstream slot, but the method is not thus limited. For example, the method as follows may be employed. That is, the terminal station 100 may measure a received power and generate a transmission power control command once in the predetermined number of slots, and each of the base stations BS_1 to BS_n may control the transmission power of the individual data channel 13 at the predetermined upstream slot intervals.

As explained above, in the embodiment of the present invention, the case, in which the terminal station 100 measures each received power for the base stations BS_1 to BS_n and controls transmission power for each of the base stations BS_1 to BS_n, has been explained.

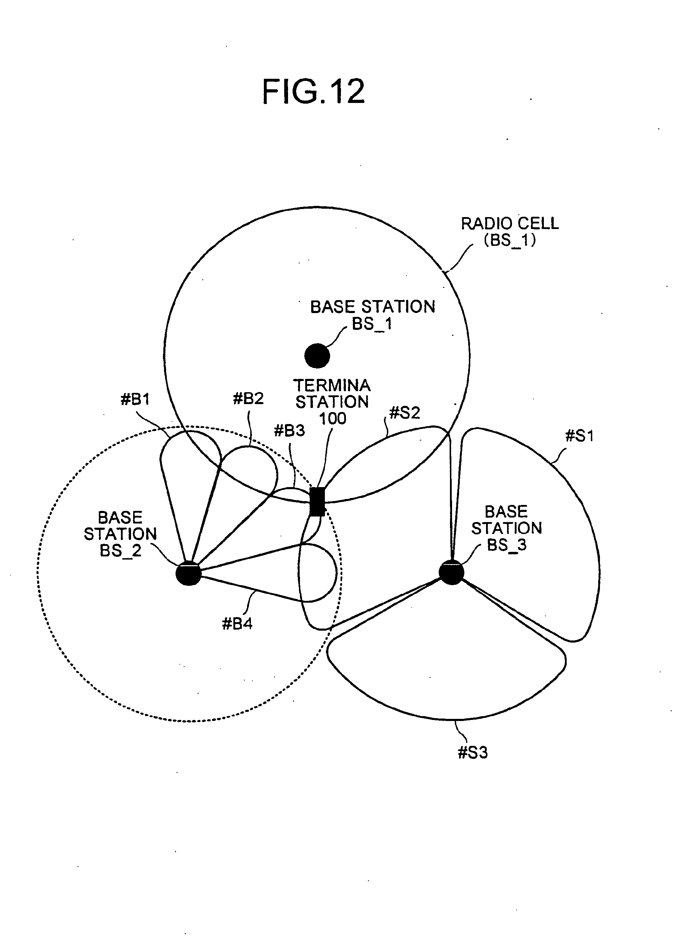

In contrast, as shown in Fig. 12, the wireless communication system as follows is considered. That is, the base station BS_1 is a nondirectional radio cell, the base station BS_2 covers a plurality of radio beams #B1 to #B4, and the base station BS_3 covers a plurality of sectors #S1 to #S3, and the terminal station 100 receives radio signals from the radio base stations BS_1 to BS_3 to perform site diversity combining on the radio signals. However, even such a wireless communication system can also employ the transmission power control in the terminal station 100 in the same manner as that of the first embodiment to third embodiment. That is, the terminal station 100 can measure each received power for the radio cell, the sectors #S1 to #S3, and the radio beams #B1 to #B4, and performs the transmission power control in each of the radio cells, the sectors, and the radio beams. In this case, it is possible to obtain the same effect as the case where the transmission power control is performed in each of the base stations.

As explained above, according to the present invention it is possible to reduce the received power of the interference signal not used for diversity combining and enhance demodulation capability of the terminal station.

Moreover, it is possible to control suppression of transmission power according to the received power difference of the interference signal, reduce the received power of the interference signal, and enhance demodulation capability of the terminal station.

Furthermore, it is possible to reduce degradation of the demodulation capability due to switching of a combined signal during movement of the terminal station. Further, when the received power difference of the power difference class is large, the attenuation amount of the transmission power is set large. Therefore, it is possible to reduce influence of an interference signal having a low likelihood of being used for diversity combining and enhance demodulation capability of the terminal station.

Moreover, it is possible to reduce influence of instantaneous fluctuations in the received signal levels of the terminal station due to fading, and realize transmission power control capable of precisely compensating for influence of a propagation path loss between the terminal station and each base station.

Furthermore, it is possible to realize transmission power control capable of precisely compensating for influence of a propagation path loss between the terminal station and each base station.

Moreover, it is possible to reduce degradation of demodulation capability due to switching of the combined signal during movement of the terminal station, reduce influence of an interference signal having a low likelihood of being used for diversity combining, and enhance demodulation capability of the terminal station.

Furthermore, it is possible to suppress the information amount of the transmission power suppress commands, reduce influence of an interference signal having a low likelihood of being used for diversity combining by simple transmission power control, and enhance demodulation capability of the terminal station.

Moreover, even if a transmission error occurs in the transmission power suppress command on a link, it is possible to accurately control the transmission power.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

### INDUSTRIAL APPLICABILITY

As explained above, the wireless communication system according to the present invention is useful for a terminal station and a base station that employ the CDMA system to perform communications. Particularly, the wireless communication system is suitable for a mobile communication system that employs a "site diversity system" for improvement in received signal quality in the terminal station. In the site diversity system, the same data is transmitted from a plurality of base stations to one and the same terminal station, and the terminal station receives signals from the base stations and combines the received signals.

## Claims

1. A terminal station (100) for performing wireless communications based on diversity combining with a plurality of base stations (BS_1 to BS_n), comprising:
a plurality of received power measuring units (3) each of which receives a radio signal transmitted by a corresponding one of the base stations (BS_1 to BS_n) and measures power of the radio signal;
a combined signal selecting unit (16) that determines, based on the power of each of the radio signals, a predetermined number of radio signals that are to be employed in the diversity combining;
an interference signal suppression control unit (17) that generates a transmission power suppress command for instructing suppression of transmission power according to a difference in the powers of a selected signal and an interference signal; and
a transmission processing unit (8, 9) that identifies a base station (BS_1 to BS_n) that has transmitted the interference signal, modulates the transmission power suppress command, and
transmits the modulated transmission power suppress command to the base station (BS_1 to BS_n) that has transmitted the interference signal; **characterized in that** the selected signal is the radio signal that is determined by the selecting unit (16) as the minimum power signal of the signals to be employed in the diversity combining and the interference signal is the radio signal other than the combined signal.

2. The terminal station according to claim 1,
wherein
the interference signal suppression control unit (17) previously stores a plurality of threshold values, classifies the difference into a plurality of classes based on a comparison of the difference and the threshold values, and generates the transmission power suppress command that includes a specific information series for identifying the class of the difference.

3. The terminal station according to claim 1,
wherein
the interference signal suppression control unit (17) previously stores a threshold value and generates the transmission power suppress command when the difference is greater than or equal to the threshold value.

4. The terminal station according to claim 1,
wherein
the interference signal suppression control unit (17) generates the transmission power suppress command according to each of a difference in the powers of each of a plurality of selected signals and each of a plurality of interference signals, the selected signals being the radio signals that are determined by the selecting unit to be employed in the diversity combining and the interference signals being the radio signal other than the selected signals, and the transmission processing unit (8, 9) identifies base stations (BS_1 to BS_n) that have transmitted corresponding one of the interference signals, modulates the transmission power suppress command and transmits the modulated transmission power suppress command to the base stations (BS_1 to BS_n) that have transmitted the interference signals.

5. A terminal station (100) for performing wireless communications based on diversity combining with a plurality of base stations (BS_1 to BS_n), comprising:
a plurality of received power measuring units (3) each of which receives a radio signal transmitted by a corresponding one of the base stations (BS_1 to BS_n) and measures a signal power-to-interference power ratio for a specific known series included in each of the radio signals;
a combined signal selecting unit (16) that determines a predetermined number of radio signals that are to be employed in the diversity combining; and
an interference signal suppression control unit (17) that generates a transmission power suppress command for instructing suppression of transmission power; and
a transmission processing unit (8, 9) that identifies a base station (BS_1 to BS_n) that has transmitted the interference signal, modulates the transmission power suppress command and
transmits the modulated transmission power suppress command to the base station (BS_1 to BS_n) that has transmitted the interference signal;
**characterized in that**
the predetermined number of radio signals that are to be employed in the diversity combining are determined based on the signal power-to-interference power ratio of each of the radio signals, and that the transmission power suppress command is generated
according to a difference in the signal power-to-interference power ratios of a selected signal and an interference signal, the selected signal being the radio signal that is determined by the selecting unit as the minimum power signal of the signals to be employed in the diversity combining and the interference signal being the radio signal other than the combined signal.

6. Use of a terminal station according to one of claims 1 to 4 in a wireless communication system which further comprises a plurality of base stations (BS_1 to BS_n), wherein each of the base stations (BS_1 to BS_n) includes
a transmission power control unit (7) that controls so as to suppress transmission power of a radio signal to be transmitted to the terminal station (100) by a predetermined attenuation amount when a radio signal that includes a transmission power suppress command is received from the terminal station (100).

7. Use according to claim 6,
wherein the transmission power suppress command instructs a suppression of the transmission power according to a difference in the powers of the minimum power-combined base station and the interfering base stations, and includes a specific information series for identifying a class of a difference in powers of a selected signal which is determined as the minimum power signal of the signals to be employed in the diversity combining, and an interference signal, and the transmission power control unit (7) of the base stations (BS_1 to BS_n) determines the attenuation amount of the transmission power of the radio power to be transmitted to the terminal station (100) based on the class.

8. Use according to claim 7, wherein the transmission power control unit (7) includes
a memory unit that previously stores a threshold value;
a command analyzer (31) that issues an attenuation instructing signal that instructs to decrease the attenuation amount when the class corresponds to a difference smaller than the threshold value and that instructs to increase the attenuation amount when the class corresponds to a difference greater than the threshold value, and
an attenuation amount determiner (32) that calculates the attenuation amount of the transmission power of the radio signal to be transmitted to the terminal station (100) based on a result of integration of the attenuation instructing signals over a predetermined period of time.

9. Use according to claim 6, wherein
the transmission power suppress command instructs a suppression of the transmission power according to a difference in the powers of the minimum power-combined base station and the interfering base stations, and wherein
the transmission power control unit (7) further includes an averaging unit (35) that sequentially receives the attenuation amounts calculated based on the transmission power suppress command and calculates a moving average of the attenuation amounts over a predetermined period of time, wherein
the transmission power control unit (7) controls so as to suppress the transmission power of the radio signal to be transmitted to the terminal station (100) based on the moving average of the attenuation amounts.

10. Use according to claim 9, wherein the transmission power control unit (7) further includes a low-pass filter, having a predetermined frequency characteristic, that sequentially receives the attenuation amounts calculated based on the transmission power suppress command and performs filtering of the attenuation amounts,
wherein
the transmission power control unit (7) controls so as to suppress the transmission power of the radio signal to be transmitted to the terminal station (100) based on attenuation amounts obtained as a result of the filtering.

11. Use according to claim 6, wherein
the interference Signal suppression control unit (17) in the terminal station (100) generates a specific information series having redundancy as the transmission power suppress command, and
the transmission power control unit (7) in each of the base stations (BS_1 to BS_n) previously stores the specific information series that has a likelihood of being transmitted from the terminal station (100), and calculates a correlation value between an information series actually transmitted from the terminal station (100) and the information series that is previously stored to specify an information series with a maximum likelihood as the transmission power suppress command, based on the correlation value.

12. Use according to claim 6, wherein the transmission power suppress command instructs a suppression of the transmission power according to a difference in the powers of the minimum power-combined base station and the interfering base stations, and
the transmission power control unit (7) of the base stations (BS_1 to BS_n) include
a command storage unit that stores transmission power suppress commands received during a predetermined period of time; and
an attenuation amount determiner (32) that counts number of the transmission power suppress commands stored in the command storage unit, and calculates the attenuation amount of the transmission power of the radio signal to be transmitted to the terminal station (100) based on the count.

13. Use of a terminal station according to claim 5 in a wireless communication system which further comprises a plurality of base stations (BS_1 to BS_n), wherein
each of the base stations includes
a transmission power control unit (7) that controls so as to suppress transmission power of a radio signal to be transmitted to the terminal station (100) by a predetermined attenuation amount when a radio signal that includes a transmission power suppress command is received from the terminal station (100).

14. A method of controlling transmission power to be used in a wireless communication system in which a terminal station (100) performs wireless communications based on diversity combining with a plurality of base stations (BS_1 to BS_n), comprising:
the terminal station receiving a radio signal transmitted by a corresponding one of the base stations;
the terminal station measuring power of each of the radio signals received;
the terminal station determining, based on the power of each of the radio signals, a predetermined number of radio signal that are to be employed in the diversity combining:
the terminal station generating a transmission power suppress command for instructing suppression of transmission power according to a difference in the powers of a selected signal and an interference signal; and
the terminal station identifying a base station that has transmitted the interference signal, modulating the transmission power suppress command, and transmitting the modulated transmission power suppress command to the base station that has transmitted the interference signal; and
each of the base stations controlling so as to suppress transmission power of a radio signal to be transmitted to the terminal station by a predetermined attenuation amount when a radio signal that includes a transmission power suppress command is received from the terminal station;
**characterized in that**
the selected signal is the radio signal that is determined by the selecting unit (16) as the minimum power signal of the signals to be employed in the diversity combining and the interference signal is the radio signal other than the combined signal.

15. The method according to claim 14, wherein
the generating includes previously storing a plurality of threshold values, classifying the difference into a plurality of classes based on a comparison of the difference and the threshold values, and generating the transmission power suppress command that includes a specific information series for identifying the class of the difference, and
the controlling includes determining the attenuation amount of the transmission power of the radio power to be transmitted to the terminal station based on the class.

16. The method according to claim 15, wherein the controlling includes
issuing an attenuation instructing signal that instructs to decrease the attenuation amount when the class corresponds to a difference smaller than a predetermined threshold value and that instructs to increase the attenuation amount when the class corresponds to a difference greater than the threshold value; and calculating the attenuation amount of the transmission power of the radio signal to be transmitted to the terminal station based on a result of integration of the attenuation instructing signals over a predetermined period of time.

17. The transmission power control method according to claim 14, wherein
the generating includes generating the transmission power suppress command when the difference is greater than or equal to a predetermined threshold value, and
the controlling includes
storing transmission power suppress commands received during a predetermined period of time; counting number of the transmission power suppress commands stored: and
calculating the attenuation amount of the transmission power of the radio signal to be transmitted to the terminal station based on the count.

## Patentansprüche

1. Endgerätestation (100) zum Durchführen von Funkkommunikationen auf der Grundlage des Diversitykombinierens mit mehreren Basisstationen (BS_1 bis BS_n), welche aufweist:
mehrere Messeinheiten (3) für empfangene Leistung, von denen jede ein Funksignal empfängt, das durch eine entsprechende der Basisstationen (BS_1 bis BS_n) gesendet wurde, und die Leistung des Funksignals misst;
eine Kombinationssignal-Auswahleinheit (16), die auf der Grundlage der Leistung jedes der Funksignale eine vorbestimmte Anzahl von Funksignalen bestimmt, die bei dem Diversitykombinieren zu verwenden sind;
eine Interferenzsignalunterdrückungs-Steuereinheit (17), die einen Sendeleistungs-Unterdrückungsbefehl zur Anweisung einer Unterdrückung der Sendeleistung gemäß einer Differenz der Leistungen eines ausgewählten Signals und
eines Interferenzsignals erzeugt; und
eine Übertragungsverarbeitungseinheit (8, 9), die eine Basisstation (BS_1 bis BS_n) identifiziert, die das Interferenzsignal übertragen hat, den Sendeleistungs-Unterdrückungsbefehl moduliert und den modulierten Sendeleistungs-Unterdrückungsbefehl zu der Basisstation (BS_1 bis BS_n) sendet, die das Interferenzsignal gesendet hat;
**dadurch gekennzeichnet, dass** das ausgewählte #Signal das Funksignal ist, das von der Auswahleinheit (16) bestimmt ist als das minimale Leistungssignal aus den bei dem Diversitykombinieren zu verwendenden Signalen, und das Interferenzsignal das Funksignal ist, das ein anderes als das kombinierte Signal ist.

2. Endgerätestation nach Anspruch 1, bei der die Interferenzsignalunterdrückungs-Steuereinheit (17) vorher mehrere Schwellenwerte speichert, die Differenz in mehrere Klassen auf der Grundlage eines Vergleichs der Differenz und der Schwellenwerte klassifiziert und den Sendeleistungs-Unterdrückungsbefehl, der eine spezifische Informationsreihe zum Identifizieren der Klasse der Differenz enthält, erzeugt.

3. Endgerätestation nach Anspruch 1, bei der die Interferenzsignalunterdrückungs-Steuereinheit (17) vorher einen Schwellenwert speichert und den Übertragungsleistungs-Unterdrückungsbefehl erzeugt, wenn die Differenz größer als der oder gleich dem Schwellenwert ist.

4. Endgerätestation nach Anspruch 1, bei der die Interferenzsignalunterdrückungs-Steuereinheit (17) den Sendeleistungs-Unterdrückungsbefehl gemäß jeder von einer Differenz der Leistungen von jedem von mehreren ausgewählten Signalen und jedem von mehreren Interferenzsignalen erzeugt, wobei die ausgewählten Signale die Funksignale sind, die von der Auswahleinheit als bei dem Diversitykombinieren zu verwenden bestimmt sind, und die Interferenzsignale das Funksignal, das ein anderes als die ausgewählten Signale ist, sind, und die Übertragungsverarbeitungseinheit (8, 9) Basisstationen (BS_1 bis BS_n) identifiziert, die ein entsprechendes der Interferenzsignale gesendet haben, den Sendeleistungs-Unterdrückungsbefehl moduliert und den modulierten Sendeleistungs-Unterdrückungsbefehl zu den Basisstationen (BS_1 bis BS_n) sendet, die die Interferenzsignale gesendet haben.

5. Endgerätestation (100) zum Durchführen von Funkkommunikationen auf der Grundlage eines Diversitykombinierens mit mehreren Basisstationen (BS_1 bis BS_n), welche aufweist:
mehrere Messeinheiten (3) für empfangene Leistung, von denen jede ein von einer entsprechenden der Basisstationen (BS_1 bis BS_n) gesendetes Funksignal empfängt und ein Signalleistungs/Interferenzleistungs-Verhältnis für eine spezifische bekannte Reihe, die in jedem der Funksignale enthalten ist, misst;
eine Kombinationssignal-Auswahleinheit (16), die eine vorbestimmte Anzahl von Funksignalen, die bei dem Diversitykombinieren zu verwenden sind, bestimmt; und
eine Interferenzsignalunterdrückungs-Steuereinheit (17), die einen Sendeleistungs-Unterdrückungsbefehl zum Anweisen einer Unterdrückung von Sendeleistung erzeugt; und
eine Übertragungsverarbeitungseinheit (8, 9), die eine Basisstation (BS_1 bis BS_n), die das Interferenzsignal gesendet hat, identifiziert, den Sendeleistungs-Unterdrückungsbefehl moduliert und den modulierten Sendeleistungs-Unterdrückungsbefehl zu der Basisstation (BS₋1 bis BS_n), das das Interferenzsignal gesendet hat, sendet;
**dadurch gekennzeichnet, dass**
die vorbestimmte Anzahl von Funksignalen, die bei dem Diversitykombinieren zu verwenden sind, bestimmt wird auf der Grundlage des Signalleistungs-/Interferenzleistungs-Verhältnisses von jedem der Funksignale, und dass der Sendeleistungs-Unterdrückungsbefehl erzeugt wird gemäß einer Differenz der Signalleistungs-/Interferenzleistungs-Verhältnisse eines ausgewählten Signals und eines Interferenzsignals, wobei das ausgewählte Signal das Funksignal ist, das von der Auswahleinheit als das minimale Leistungssignal aus den bei dem Diversitykombinieren zu verwendenden Signalen bestimmt ist, und das Interferenzsignal das Funksignal, das ein anderes als das kombinierte Signal ist, ist.

6. Verwendung einer Endgerätestation gemäß einem der Ansprüche 1 bis 4 in einem Funkkommunikationssystem, das weiterhin mehrere Basisstationen (BS_1 bis BS_n) aufweist, wobei
jede der Basisstationen (BS_1 bis BS_n) eine Sendeleistungs-Steuereinheit (7) enthält, die eine Steuerung derart durchführt, dass Sendeleistung eines zu der Endgerätestation (100) zu sendenden Funksignals um eine vorbestimmte Dämpfungsgröße unterdrückt wird, wenn ein Funksignal, das einen Sendeleistungs-Unterdrückungsbefehl enthält, von der Endgerätestation (100) empfangen wird.

7. Verwendung nach Anspruch 6,
bei der der Sendeleistungs-Unterdrückungsbefehl eine Unterdrückung der Sendeleistung gemäß einer Differenz der Leistungen der Basisstation mit minimaler kombinierter Leistung und der störenden Basisstationen anweist und eine spezifische Informationsreihe zum Identifizieren einer Klasse einer Differenz der Leistungen eines ausgewählten Signals, das als das Signal mit minimaler Leistung aus den bei dem Diversitykombinieren zu verwendenden Signal bestimmt ist, und eines Interferenzsignals enthält, und die Sendeleistungs-Steuereinheit (7) der Basisstationen (BS_1 bis BS_n) die Dämpfungsgröße für die Sendeleistung der zu der Endgerätestation (100) zu sendenden Funkleistung auf der Grundlage der Klasse bestimmt.

8. Verwendung nach Anspruch 7, bei der die Sendeleistungs-Steuereinheit (7) enthält:
eine Speichereinheit, die vorher einen Schwellenwert speichert;
eine Befehlsanalysevorrichtung (31), die ein Dämpfungsbefehlssignal ausgibt, das die Herabsetzung der Dämpfungsgröße anweist, wenn die Klasse einer Differenz entspricht, die kleiner als der Schwellenwert ist, und das eine Erhöhung der Dämpfungsgröße anweist, wenn die Klasse einer Differenz entspricht, die größer als der Schwellenwert ist, und
eine Dämpfungsgrößen-Bestimmungsvorrichtung (32), die die Dämpfungsgröße für die Sendeleistung des zu der Endgerätestation (100) zu sendenden Funksignals berechnet auf der Grundlage eines Ergebnisses der Integration der Dämpfungsbefehlssignale über eine vorbestimmte Zeitperiode.

9. Verwendung nach Anspruch 6, bei der
der Sendeleistungs-Unterdrückungsbefehl eine Unterdrückung der Sendeleistung gemäß einer Differenz der Leistungen der Basisstation mit minimaler kombinierter Leistung und der störenden Basisstationen anweist, und bei der die Sendeleistungs-Steuereinheit (7) weiterhin eine Durchschnittswert-Bildungseinheit (35) enthält, die aufeinander folgend die auf der Grundlage des Sendeleistungs-Unterdrückungsbefehls berechneten Dämpfungsgrößen empfängt und einen Bewegungsdurchschnitt der Dämpfungsgrößen über eine vorbestimmte Zeitperiode berechnet, wobei
die Sendeleistungs-Steuereinheit (7) eine Steuerung derart durchführt, dass die Sendeleistung des zu der Endgerätestation (100) zu sendenden Funksignals auf der Grundlage des Bewegungsdurchschnitts der Dämpfungsgrößen unterdrückt wird.

10. Verwendung nach Anspruch 9, bei der die Sendeleistungs-Steuereinheit (7) weiterhin ein Tiefpassfilter mit einer vorbestimmten Frequenzcharakteristik enthält, das aufeinander folgend die auf der Grundlage des Sendeleistungs-Unterdrückungsbefehls berechneten Dämpfungsgrößen empfängt und eine Filterung der Dämpfungsgrößen durchführt, wobei
die Sendeleistungs-Steuereinheit (7) eine Steuerung derart durchführt, dass die Sendeleistung des zu der Endgerätestation (100) zu sendenden Funksignals auf der Grundlage von als ein Ergebnis der Filterung erhaltenen Dämpfungsgrößen unterdrückt wird.

11. Verwendung nach Anspruch 6, bei der
die Interferenzsignalunterdrückungs-Steuereinheit (17) in der Endgerätestation (100) eine spezifische Informationsreihe mit Redundanz als den Sendeleistungs-Unterdrückungsbefehl erzeugt und die Sendeleistungs-Steuereinheit (7) in jeder der Basisstationen (BS_1 bis BS_n) vorher die spezifische Informationsreihe speichert, die eine Wahrscheinlichkeit, von der Endgerätestation (100) gesendet zu werden, hat, und einen Korrelationswert zwischen einer Informationsreihe, die tatsächlich von der Endgerätestation (100) gesendet wird, und der Informationsreihe, die vorher gespeichert wurde, berechnet, um eine Informationsreihe mit einer maximalen Wahrscheinlichkeit als den Sendeleistungs-Unterdrückungsbefehl auf der Grundlage des Korrelationswertes zu spezifizieren.

12. Verwendung nach Anspruch 6, bei der der Sendeleistungs-Unterdrückungsbefehl eine Unterdrückung der Sendeleistung gemäß einer Differenz der Leistungen der Basisstation mit minimaler kombinierter Leistung und der störenden Basisstationen anweist, und
die Sendeleistungs-Steuereinheit (7) der Basisstationen (BS_1 bis BS_n) eine Befehlsspeichereinheit enthält, die während einer vorbestimmten Zeitperiode empfangene Sendeleistungs-Unterdrückungsbefehle speichert; und
eine Dämpfungsgrößen-Bestimmungsvorrichtung (32), die die Anzahl der in der Befehlsspeichereinheit gespeicherten Sendeleistungs-Unterdrückungsbefehle zählt und die Dämpfungsgröße der Sendeleistung des zu der Endgerätestation (100) zu sendenden Funksignals auf der Grundlage des Zählwertes berechnet.

13. Verwendung einer Endgerätestation nach Anspruch 5 in einem Funkkommunikationssystem, das weiterhin mehrere Basisstationen (BS_1 bis BS_n) aufweist, wobei
jede der Basisstationen eine Sendeleistungs-Steuereinheit (7) enthält, die eine Steuerung derart durchführt, dass die Sendeleistung eines zu der Endgerätestation (100) zu sendenden Funksignals mit einer vorbestimmten Dämpfungsgröße unterdrückt wird, wenn ein Funksignal, das einen Sendeleistungs-Unterdrückungsbefehl enthält, von der Endgerätestation (100) empfangen wird.

14. Verfahren zum Steuern der in einem Funkkommunikationssystem zu verwendenden Sendeleistung, in welchem eine Endgerätestation (100) Funkkommunikationen auf der Grundlage eines Diversitykombinierens mit mehreren Basisstationen (BS_1 bis BS_n) durchführt, welches aufweist:
die Endgerätestation empfängt ein von einer entsprechenden der Basisstationen gesendetes Funksignal;
die Endgerätestation misst die Leistung von jedem der empfangenen Funksignale;
die Endgerätestation bestimmt auf der Grundlage der Leistung von jedem der Funksignale eine vorbestimmte Anzahl von Funksignalen, die bei dem Diversitykombinieren zu verwenden sind;
die Endgerätestation erzeugt einen Sendeleistungs-Unterdrückungsbefehl zum Anweisen einer Unterdrückung der Sendeleistung gemäß einer Differenz zwischen den Leistungen eines ausgewählten Signals und eines Interferenzsignals; und
die Endgerätestation identifiziert eine Basisstation, die das Interferenzsignal gesendet hat, moduliert den Sendeleistungs-Unterdrückungsbefehl und sendet den modulierten Sendeleistungs-Unterdrückungsbefehl zu der Basisstation, die das Interferenzsignal gesendet hat; und
jede der Basisstationen führt eine Steuerung derart durch, dass die Sendeleistung eines zu der Endgerätestation zu sendenden Funksignals um eine vorbestimmte Dämpfungsgröße unterdrückt wird, wenn ein Funksignal, das einen Sendeleistungs-Unterdrückungsbefehl enthält, von der Endgerätestation empfangen wird;
**dadurch gekennzeichnet, dass**
das ausgewählte Signal das Funksignal ist, das von der Auswahleinheit (16) als das Signal mit minimaler Leistung aus den bei dem Diversitykombinieren zu verwendenden Signalen bestimmt ist, und das Interferenzsignal das Funksignal, das ein anderes als das kombinierte Signal ist, ist.

15. Verfahren nach Anspruch 14, bei dem
das Erzeugen das vorhergehende Speichern mehrerer Schwellenwerte, das Klassifizieren der Differenz in mehrere Klassen auf der Grundlage eines Vergleichs der Differenz und der Schwellenwerte und das Erzeugen des Sendeleistungs-Unterdrückungsbefehls, der eine spezifische Informationsreihe zum Identifizieren der Klasse der Differenz enthält, enthält, und
das Steuern das Bestimmen der Dämpfungsgröße der Sendeleistung der zu der Endgerätestation zu sendenden Funkleistung auf der Grundlage der Klasse enthält.

16. Verfahren nach Anspruch 15, bei dem das Steuern enthält:
Ausgeben eines Dämpfungsbefehlssignals, das die Herabsetzung der Dämpfungsgröße anweist, wenn die Klasse einer Differenz entspricht, die kleiner als ein vorbestimmter Schwellenwert ist, und das die Erhöhung der Dämpfungsgröße anweist, wenn die Klasse einer Differenz entspricht, die größer als der Schwellenwert ist; und
Berechnen der Dämpfungsgröße der Sendeleistung des zu der Endgerätestation zu sendenden Funksignals auf der Grundlage eines Ergebnisses der Integration der Dämpfungsbefehlssignale über eine vorbestimmte Zeitperiode.

17. Übertragungsleistungs-Steuerverfahren nach Anspruch 14, bei dem
das Erzeugen das Erzeugen des Sendeleistungs-Unterdrückungsbefehls enthält, wenn die Differenz größer als ein oder gleich einem vorbestimmten Schwellenwert ist, und
das Steuern enthält:
Speichern von Sendeleistungs-Unterdrückungsbefehlen, die während einer vorbestimmten Zeitperiode empfangen wurden;
Zählen der Anzahl der gespeicherten Sendeleistungs-Unterdrückungsbefehle; und
Berechnen der Dämpfungsgröße der Sendeleistung des zu der Endgerätestation zu sendenden Funksignals auf der Grundlage des Zählwerts.

## Revendications

1. Station terminale (100) pour réaliser des communications sans fil fondées sur une combinaison de diversité avec une pluralité de stations de base (BS_1 à BS_n), comprenant :
une pluralité d'unités de mesure de puissance reçues (3), dont chacune reçoit un signal radio émis par la station de base correspondante des stations de base (BS_1 à BS_n) et mesure la puissance du signal radio ;
une unité de sélection de signaux combinés (16) qui détermine, en se basant sur la puissance de chacun des signaux radio, un nombre prédéterminé de signaux radio devant être utilisés dans la combinaison de diversité ;
une unité de commande de suppression de signaux d'interférence (17) qui génère une commande de suppression de puissance d'émission pour ordonner une suppression de puissance d'émission selon une différence entre les puissances d'un signal sélectionné et d'un signal d'interférence ; et
une unité de traitement d'émission (8, 9) qui identifie une station de base (BS_1 à BS_n) qui a émis le signal d'interférence, module la commande de suppression de puissance d'émission, et transmet la commande de suppression de puissance d'émission modulée à la station de base (BS_1 à BS_n) qui a émis le signal d'interférence ;
**caractérisée en ce que** le signal sélectionné est le signal radio qui est déterminé par l'unité de sélection (16) comme le signal de puissance minimum des signaux à utiliser dans la combinaison de diversité et le signal d'interférence est le signal radio autre que le signal combiné.

2. Station terminale selon la revendication 1, dans laquelle
l'unité de commande de suppression de signaux d'interférence (17) stocke tout d'abord une pluralité de valeurs de seuil, classe la différence en une pluralité de catégories en se basant sur une comparaison de la différence et des valeurs de seuil, et génère la commande de suppression de puissance d'émission qui inclut une série d'informations spécifiques pour identifier la catégorie de la différence.

3. Station terminale selon la revendication 1, dans laquelle
l'unité de commande de suppression de signaux d'interférence (17) stocke tout d'abord une valeur de seuil et génère la commande de suppression de puissance d'émission lorsque la différence est supérieure ou égale à la valeur de seuil.

4. Station terminale selon la revendication 1, dans laquelle
l'unité de commande de suppression de signaux d'interférence (17) génère la commande de suppression de puissance d'émission selon chaque différence entre les puissances de chacun d'une pluralité de signaux sélectionnés et chacun d'une pluralité de signaux d'interférence, les signaux sélectionnés étant les signaux radio qui sont déterminés par l'unité de sélection à utiliser dans la combinaison de diversité et les signaux d'interférence étant le signal radio autre que les signaux sélectionnés, et l'unité de traitement d'émission (8, 9) identifie les stations de base (BS_1 à BS_n) qui ont émis le signal d'interférence correspondant des signaux d'interférence, module la commande de suppression de puissance d'émission et transmet la commande de suppression de puissance d'émission modulée aux stations de base (BS_1 à BS_n) qui ont transmis les signaux d'interférence.

5. Station terminale (100) pour réaliser des communications sans fil basées sur une combinaison de diversité avec une pluralité de stations de base (BS_1 à BS_n), comprenant :
une pluralité d'unités de mesure de puissance reçues (3), dont chacune reçoit un signal radio émis par la station de base correspondante des stations de base (BS_1 à BS_n) et mesure un rapport de puissance puissance de signal à interférence pour une série connue spécifique incluse dans chacun des signaux radio ;
une unité de sélection de signaux combinés (16) qui détermine un nombre prédéterminé de signaux radio devant être utilisés dans la combinaison de diversité ; et
une unité de commande de suppression de signaux d'interférence (17) qui génère une commande de suppression de puissance d'émission pour ordonner une suppression de puissance d'émission ; et
une unité de traitement d'émission (8, 9) qui identifie une station de base (BS_1 à BS_n) qui a émis le signal d'interférence, module la commande de suppression de puissance d'émission et transmet la commande de suppression de puissance d'émission modulée à la station de base (BS_1 à BS_n) qui a émis le signal d'interférence ;
**caractérisée en ce que**
le nombre prédéterminé de signaux radio devant être utilisés dans la combinaison de diversité est déterminé en fonction du rapport de puissance puissance de signal à interférence de chacun des signaux radio, et que la commande de suppression de puissance d'émission est générée selon une différence entre les rapports de puissance puissance de signal à interférence d'un signal sélectionné et d'un signal d'interférence, le signal sélectionné étant le signal radio qui est déterminé par l'unité de sélection comme le signal de puissance minimum des signaux à utiliser dans la combinaison de diversité et le signal d'interférence étant le signal radio autre que le signal combiné.

6. Utilisation d'une station terminale selon l'une des revendications 1 à 4 dans un système de communication sans fil qui comprend en outre une pluralité de stations de base (BS_1 à BS_n), dans laquelle
chacune des stations de base (BS_1 à BS_n) inclut
une unité de commande de puissance d'émission (7) qui effectue une commande de sorte à supprimer la puissance d'émission d'un signal radio à transmettre à la station terminale (100) par une quantité d'atténuation prédéterminée lorsqu'un signal radio qui inclut une commande de suppression de puissance d'émission est reçu depuis la station terminale (100).

7. Utilisation selon la revendication 6, dans laquelle
la commande de suppression de puissance d'émission ordonne une suppression de la puissance d'émission selon une différence entre les puissances de la station de base à puissance combinée minimum et des stations de base perturbatrices, et inclut une série d'informations spécifiques pour identifier une catégorie d'une différence entre les puissances d'un signal sélectionné qui est déterminé comme le signal de puissance minimum des signaux à utiliser dans la combinaison de diversité et d'un signal d'interférence, et l'unité de commande de puissance d'émission (7) des stations de base (BS_1 à BS_n) détermine la quantité d'atténuation de la puissance d'émission du signal radio à transmettre à la station terminale (100) en se fondant sur la catégorie.

8. Utilisation selon la revendication 7, dans laquelle l'unité de commande de puissance d'émission (7) inclut
une unité de mémoire qui stocke tout d'abord une valeur de seuil;
un analyseur de commande (31) qui délivre un signal d'instruction d'atténuation qui ordonne de diminuer la quantité d'atténuation lorsque la catégorie correspond à une différence inférieure à la valeur de seuil et qui ordonne d'augmenter la quantité d'atténuation lorsque la catégorie correspond à une différence supérieure à la valeur de seuil,
et
une unité de détermination de quantité d'atténuation (32) qui calcule la quantité d'atténuation de la puissance d'émission du signal radio à transmettre à la station terminale (100) en se basant sur un résultat d'intégration des signaux d'instruction d'atténuation sur un intervalle de temps prédéterminé.

9. Utilisation selon la revendication 6, dans laquelle
la commande de suppression de puissance d'émission ordonne une suppression de la puissance d'émission selon une différence entre les puissances de la station de base à puissance combinée minimum et des stations de base perturbatrices, et dans laquelle
l'unité de commande de puissance d'émission (7) inclut en outre une unité de calcul de moyenne (35) qui reçoit de façon séquentielle les quantités d'atténuation calculées en se basant sur la commande de suppression de puissance d'émission et calcule une moyenne mobile des quantités d'atténuation sur un intervalle de temps prédéterminé, dans laquelle
l'unité de commande de puissance d'émission (7) effectue une commande de sorte à supprimer la puissance d'émission du signal radio à transmettre à la station terminale (100) en se basant sur la moyenne mobile des quantités d'atténuation.

10. Utilisation selon la revendication 9, dans laquelle l'unité de commande de puissance d'émission (7) inclut en outre un filtre passe-bas, comportant une caractéristique de fréquence prédéterminée, qui reçoit de façon séquentielle les quantités d'atténuation calculées en se basant sur la commande de suppression de puissance d'émission et effectue un filtrage des quantités d'atténuation, où
l'unité de commande de puissance d'émission (7) effectue une commande de sorte à supprimer la puissance d'émission du signal radio à transmettre à la station terminale (100) en se basant sur les quantités d'atténuation obtenues suite au filtrage.

11. Utilisation selon la revendication 6, dans laquelle
l'unité de commande de suppression de signaux d'interférence (17) dans la station terminale (100) génère une série d'informations spécifiques comportant une redondance comme la commande de suppression de puissance d'émission, et l'unité de commande de puissance d'émission (7) dans chacune des stations de base (BS_1 à BS_n) stocke tout d'abord la série d'informations spécifiques qui est susceptible d'être transmise depuis la station terminale (100), et calcule une valeur de corrélation entre une série d'informations réellement transmise depuis la station terminale (100) et la série d'informations précédemment stockée pour spécifier une série d'informations avec une probabilité maximum comme la commande de suppression de puissance d'émission, en se basant sur la valeur de corrélation.

12. Utilisation selon la revendication 6, dans laquelle la commande de suppression de puissance d'émission ordonne une suppression de la puissance d'émission selon une différence entre les puissances de la station de base à puissance combinée minimum et des stations de base perturbatrices, et
l'unité de commande de puissance d'émission (7) des stations de base (BS_1 à BS_n) inclut une unité de stockage de commandes qui stocke des commandes de suppression de puissance d'émission reçues pendant un intervalle de temps prédéterminé ; et
une unité de détermination de quantité d'atténuation (32) qui compte le nombre des commandes de suppression de puissance d'émission stockées dans l'unité de stockage de commandes, et calcule la quantité d'atténuation de la puissance d'émission du signal radio à transmettre à la station terminale (100) en se basant sur le comptage.

13. Utilisation d'une station terminale selon la revendication 5 dans un système de communication sans fil qui comprend en outre une pluralité de stations de base (BS_1 à BS _n), où
chacune des stations de base inclut
une unité de commande de puissance d'émission (7) qui effectue une commande de sorte à supprimer la puissance d'émission d'un signal radio à transmettre à la station terminale (100) par une quantité d'atténuation prédéterminée lorsqu'un signal radio qui inclut une commande de suppression de puissance d'émission est reçu depuis la station terminale (100).

14. Procédé de commande de puissance d'émission à utiliser dans un système de communication sans fil dans lequel une station terminale (100) effectue des communications sans fil basées sur une combinaison de diversité avec une pluralité de stations de base (BS_1 à BS_n), comprenant les étapes consistant en ce que :
la station terminale reçoit un signal radio émis par la station de base correspondante des stations de base ;
la station terminale mesure la puissance de chacun des signaux radio reçus ;
la station terminale détermine, en se fondant sur la puissance de chacun des signaux radio, un nombre prédéterminé de signaux radio devant être utilisés dans la combinaison de diversité ;
la station terminale génère une commande de suppression de puissance d'émission pour ordonner une suppression de puissance d'émission selon une différence entre les puissances d'un signal sélectionné et d'un signal d'interférence ; et
la station terminale identifie une station de base qui a émis le signal d'interférence, module la commande de suppression de puissance d'émission, et transmet la commande de suppression de puissance d'émission modulée à la station de base qui a émis le signal d'interférence ;
et
chacune des stations de base effectue une commande de sorte à supprimer la puissance d'émission d'un signal radio à transmettre à la station terminale par une quantité d'atténuation prédéterminée lorsqu'un signal radio qui inclut une commande de suppression de puissance d'émission est reçu depuis la station terminale ;
**caractérisé en ce que**
le signal sélectionné est le signal radio qui est déterminé par l'unité de sélection (16) comme le signal de puissance minimum des signaux à utiliser dans la combinaison de diversité et le signal d'interférence est le signal radio autre que le signal combiné.

15. Procédé selon la revendication 14, dans lequel l'étape de
génération inclut tout d'abord un stockage d'une pluralité de valeurs de seuil, un classement de la différence en une pluralité de catégories en se basant sur une comparaison de la différence et des valeurs de seuil, et une génération de la commande de suppression de puissance d'émission qui inclut une série d'informations spécifiques pour identifier la catégorie de la différence, et l'étape de
commande inclut une détermination de la quantité d'atténuation de la puissance d'émission du signal radio à transmettre à la station terminale en fonction sur la catégorie.

16. Procédé selon la revendication 15, dans lequel l'étape de commande inclut
une émission d'un signal d'instruction d'atténuation qui ordonne de diminuer la quantité d'atténuation lorsque la catégorie correspond à une différence inférieure à une valeur de seuil prédéterminée et qui ordonne d'augmenter la quantité d'atténuation lorsque la catégorie correspond à une différence supérieure à la valeur de seuil, et
un calcul de la quantité d'atténuation de la puissance d'émission du signal radio à transmettre à la station terminale en se basant sur un résultat d'intégration des signaux d'instruction d'atténuation sur un intervalle de temps prédéterminé.

17. Procédé de commande de puissance d'émission selon la revendication 14, dans lequel l'étape de
la génération inclut une génération de la commande de suppression de puissance d'émission lorsque la différence est supérieure ou égale à une valeur de seuil prédéterminée, et
l'étape de commande inclut
un stockage des commandes de suppression de puissance d'émission reçues pendant un intervalle de temps prédéterminé ;
un comptage du nombre de commandes de suppression de puissance d'émission stockées ; et
un calcul de la quantité d'atténuation de la puissance d'émission du signal radio à transmettre à la station terminale en se basant sur le comptage.
